(19) Europäisches Patentamt
European Patent Office
Office européen des brevets

(11) **EP 4 050 301 B1**

(12) **EUROPÄISCHE PATENTSCHRIFT**

(45) Veröffentlichungstag und Bekanntmachung des Hinweises auf die Patenterteilung:
**21.08.2024 Patentblatt 2024/34**

(21) Anmeldenummer: **22156019.6**

(22) Anmeldetag: **10.02.2022**

(51) Internationale Patentklassifikation (IPC):
**G01B 9/02001** *(2022.01)* **G01B 9/02055** *(2022.01)*

(52) Gemeinsame Patentklassifikation (CPC):
**G01B 9/02007; G01B 9/0201; G01B 9/02081;**
G01B 2290/45; G01B 2290/60

(54) **VORRICHTUNG ZUR INTERFEROMETRISCHEN ABSTANDSMESSUNG**

DEVICE FOR INTERFEROMETRIC DISTANCE MEASUREMENT

DISPOSITIF DE MESURE INTERFÉROMETRIQUE DE DISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.02.2021 DE 102021201722**

(43) Veröffentlichungstag der Anmeldung:
**31.08.2022 Patentblatt 2022/35**

(73) Patentinhaber: **Dr. Johannes Heidenhain GmbH 83301 Traunreut (DE)**

(72) Erfinder: **Huber-Lenk, Herbert 83365 Nußdorf/Sondermoning (DE)**

(56) Entgegenhaltungen:
**EP-A1- 3 447 441 WO-A1-2018/171970**

- **KONSTANTINOS FALAGGIS AND CATHERINE E TOWERS: "Absolute metrology by phase and frequency modulation for multiwavelength interferometry", OPTICS LETTERS, OPTICAL SOCIETY OF AMERICA, US, vol. 36, no. 15, 1 August 2011 (2011-08-01), pages 2928 - 2930, XP001569590, ISSN: 0146-9592, [retrieved on 20110801], DOI: 10.1364/OL.36.002928**

**Beschreibung**

## GEBIET DER TECHNIK

Die vorliegende Erfindung betrifft eine Vorrichtung zur interferometrischen Abstandsmessung. Insbesondere ist diese Vorrichtung geeignet zur Bestimmung absoluter Abstände zwischen zwei zueinander beweglichen Objekten.

## STAND DER TECHNIK

Eine gattungsgemäße Vorrichtung ist aus der DE 10 2017 213 258 A1 bekannt. Diese Vorrichtung zur interferometrischen Bestimmung absoluter Abstände zwischen zwei zueinander beweglichen Objekten basiert auf einem sogenannten Mehrwellenlängen-Verfahren. Aus der Differenzbildung der Interferenzphasen unterschiedlicher Wellenlängen werden dabei ein oder mehrere Schwebungsphasen bestimmt, die eine eindeutige absolute Positionsbestimmung über einen größeren Abstandsbereich ermöglicht.

Entsprechende Vorrichtungen können dabei auch kaskadiert ausgebildet werden und ausgehend von mehreren unterschiedlichen Wellenlängen die Erzeugung mehrerer Schwebungsphasen vorsehen.

Die bekannte Vorrichtung aus der DE 10 2017 213 258 A1 weist eine Mehrwellenlängen-Lichtquelle auf, die ein Strahlenbündel mit mindestens drei unterschiedlichen Wellenlängen liefert. Dabei ist die Mehrwellenlängen-Lichtquelle als Faserlaser ausgebildet, der mindestens drei verschiedene Bragg-Gitter umfasst, deren Gitterkonstanten auf die erzeugten Wellenlängen abgestimmt sind. Ferner ist eine Interferometer-Einheit vorgesehen, die das Strahlenbündel in ein Messstrahlenbündel und ein Referenzstrahlenbündel aufspaltet. Das Messstrahlenbündel propagiert in einem Messarm in Richtung eines Messreflektors und erfährt dort eine Rückreflexion; das Referenzstrahlenbündel propagiert in einem Referenzarm in Richtung eines stationären Referenzreflektors und erfährt dort eine Rückreflexion. Die vom Mess- und Referenzreflektor zurückreflektierten Mess- und Referenzstrahlenbündel überlagern sich interferierend in einem Interferenzstrahlenbündel. Über eine Detektions-Einheit erfolgt eine Aufspaltung des Interferenzstrahlenbündels dergestalt, dass pro Wellenlänge jeweils mehrere phasenverschobene Teil-Interferenzsignale resultieren. Mit Hilfe einer Signalverarbeitungs-Einheit wird aus den Teil-Interferenzsignalen unterschiedlicher Wellenlängen und einem zusätzlichen Grobpositionssignal eine absolute Positionsinformation bezüglich des Messreflektors bestimmt. Zur Erzeugung des Grobpositionssignals wird ein Laufzeitmessungs-Verfahren vorgeschlagen, bei dem die Laufzeit von Lichtpulsen zum Messreflektor und zurück bestimmt und aus der Laufzeit das Grobpositionssignal abgeleitet wird. Für ein derartiges Laufzeitmessungs-Verfahren sind für jede Messachse zusätzliche optische und elektronische Komponenten zur Lichterzeugung, Ein- und Auskopplung, Detektion, Verstärkung und Zeitmessung erforderlich.

Aus der WO 2018/171970 A1 ist eine interferometrische Abstandsmessung zu einem beweglichen Objekt basierend auf einem Heterodyn-Prinzip bekannt, bei dem eine hochauflösende interferometrische Abstandsmessung zu einem Objekt mit einem gröber-auflösendem Time-of-Flight-Messverfahren kombiniert wird. Hierzu ist vorgesehen, in einem der frequenzverschiedenen Strahlenbündel hinter einem Strahlteiler und einem akustooptischen Modulator einen Modulator für eine Phasen- oder Amplitudenmodulation dieses Strahlenbündels anzuordnen und das entsprechend modulierte Strahlenbündel sowohl dem Detektor für die interferometrische Abstandsmessung als auch dem Detektor für das Time-of-Flight-Messverfahren zuzuführen. Aus dem zeitlichen Abstand, in dem auf den beiden Detektoren ein moduliertes Signal erfassbar ist, kann auf eine Grob-Position des beweglichen Objekts geschlossen werden. Hinweise darauf, wie das vorgeschlagene Konzept auf eine interferometrische Abstandsmessung basierend auf einem Homodyn-Prinzip und einer Mehrwellenlängen-Lichtquelle übertragbar sein könnte, sind diesem Dokument nirgends zu entnehmen.

Aus der Veröffentlichung "Absolute metrology by phase and frequency modulation for multiwavelength interferometry", K. Falaggis, C.E. Towers, Optics Letters, Vol. 36, No. 15, 1. August 2011, S. 2928-2930 ist ein interferometrisches Messverfahren bekannt, bei dem eine Grobpositionsinformation aus einer definierten, niederfrequenten Variation bzw. Modulation der Frequenz des verwendeten Lasers gewonnen wird. Über eine zusätzlich aufgeprägte Phasenmodulation soll ferner die genaue Phasenlage eines einzigen Interferometersignals bestimmt werden. Ein derartiges Verfahren ist lediglich für quasistatische Positionsmessungen geeignet, nicht jedoch für hochdynamische Messaufgaben.

## ZUSAMMENFASSUNG DER ERFINDUNG

**Fortsetzung: Ursprüngliche Seite 3**

Der vorliegenden Erfindung liegt die Aufgabe zugrunde, eine Vorrichtung zur absoluten interferometrischen Abstandsmessung anzugeben, bei der mit möglichst geringem Zusatzaufwand ein Grobpositionssignal erzeugbar ist.

Diese Aufgabe wird erfindungsgemäß durch eine Vorrichtung mit den Merkmalen des Anspruchs 1 gelöst.

Vorteilhafte Ausführungen der erfindungsgemäßen Vorrichtung ergeben sich aus den Maßnahmen, die in den abhängigen Ansprüchen aufgeführt sind.

Die erfindungsgemäße Vorrichtung dient zur interferometrischen Abstandsmessung. Sie umfasst eine Mehrwellenlängen-Lichtquelle, die ein Strahlenbündel mit mindestens drei unterschiedlichen Wellenlängen liefert. Ferner ist mindestens eine Interferometer-Einheit vorgesehen, die das Strahlenbündel in ein Messstrahlenbündel und ein Referenzstrahlenbündel aufspaltet. Das Messstrahlenbündel propagiert in einem Messarm in Richtung eines entlang einer Messachse beweglichen Messreflektors und erfährt dort eine Rückreflexion; das Referenzstrahlenbündel propagiert in einem Referenzarm in Richtung eines stationären Referenzreflektors und erfährt dort eine Rückreflexion. Die vom Mess- und Referenzreflektor zurückreflektierten Mess- und Referenzstrahlenbündel überlagern sich interferierend in einem Interferenzstrahlenbündel. Desweiteren ist mindestens eine Detektions-Einheit vorgesehen, über die eine Aufspaltung des Interferenzstrahlenbündels dergestalt erfolgt, dass pro Wellenlänge jeweils mehrere phasenverschobene Teil-Interferenzsignale resultieren. Mindestens eine Signalverarbeitungs-Einheit ist dazu ausgebildet und eingerichtet, aus den Teil-Interferenzsignalen unterschiedlicher Wellenlängen und einem zusätzlichen Grobpositionssignal eine absolute Positionsinformation bezüglich des Messreflektors zu bestimmen. Zur Erzeugung des Grobpositionssignals wird über eine Modulations-Einheit auf mindestens eine emittierte Wellenlänge eine Phasenmodulation aufgeprägt, so dass ein phasenmoduliertes Strahlenbündel in Richtung der mindestens einen Interferometer-Einheit propagiert und in mindestens einem Teil-Interferenzsignal eine abstandsabhängige Modulation verursacht.

In einer vorteilhaften Ausführungsform 2 umfasst die Modulations-Einheit einen elektrooptischen Modulator sowie einen Sinusgenerator, wobei der Sinusgenerator den elektrooptischen Modulator mit einer definierten Modulationsfrequenz und einer definierten Spannungsamplitude ansteuert.

Dabei ist die Modulationsfrequenz des Sinusgenerators vorzugsweise so gewählt, dass diese größer als auftretende mechanische und akustische Frequenzen ist.

Es ist zum Beispiel möglich, dass die Modulationsfrequenz des Sinusgenerators im Frequenzbereich [100 kHz... 10 MHz] gewählt ist.

Der elektrooptische Modulator kann dabei als integrierter, fasergekoppelter Modulator ausgebildet sein.

Vorzugsweise resultiert in mindestens einem Teil-Interferenzsignal eine abstandsabhängige Phasen- und Amplitudenmodulation.

In einer vorteilhaften Ausführungsform ist die Signalverarbeitungs-Einheit dazu ausgebildet und eingerichtet, das Grobpositionssignal ($L_G$) zu erzeugen.

Dabei kann die die Signalverarbeitungs-Einheit dazu ausgebildet und eingerichtet sein,

- aus mindestens einem ausgewerteten Teil-Interferenzsignal einen modulierten Phasenwert zu bestimmen, und
- aus dem modulierten Phasenwert eine Positionsphasenamplitude zu bestimmen, und
- mit Hilfe der Positionsphasenamplitude und der in das phasenmodulierte Strahlenbündel eingeprägten Lichtphasenamplitude das Grobpositionssignal zu bestimmen.

Mit Vorteil wird das Grobpositionssignal gemäß der Beziehung

$$L_G = \frac{c}{2\pi * f_{PM}} * \mathrm{asin}\left(\frac{A_{\lambda i}}{2 A_{\lambda i PM}}\right)$$

bestimmt, mit

$L_G$ := Grobpositionssignal
$c$ := Lichtgeschwindigkeit im Messmedium
$f_{PM}$ := Modulationsfrequenz
$A_{\lambda,i}$; i = 1, 2, 3 := Positionsphasenamplitude
$A_{\lambda iPM}$; i = 1, 2, 3 := Lichtphasenamplitude

Es ist ferner möglich, dass eine Lichtphasenamplituden-Ermittlungseinheit dazu ausgebildet und eingerichtet ist, die dem phasenmodulierten Strahlenbündel eingeprägte Lichtphasenamplitude zu bestimmen.

Desweiteren kann vorgesehen sein, dass die Signalverarbeitungs-Einheit dazu ausgebildet und eingerichtet ist,

- aus den phasenverschobenen elektrischen Teil-Interferenzsignalen pro Wellenlänge einen unmodulierten Phasenwert zu bestimmen, und
- aus den unmodulierten Phasenwerten mehrere Differenzphasen zu bilden, die jeweils unterschiedlichen synthetischen Wellenlängen zugeordnet sind, und
- aus dem Grobpositionssignal sowie den Differenzphasen eine hochauflösende absolute Positionsinformation bezüglich des Messreflektors zu bestimmen.

Es ist ferner möglich, dass

- ein Aufspalt-Element das phasenmodulierte Strahlenbündel in mehrere phasenmodulierte Teil-Strahlenbündel aufteilt und,
- einer Mehrzahl von Interferometer-Einheiten jeweils unterschiedliche Messachsen zuzuordnen, denen jeweils ein phasenmoduliertes Teil-Strahlenbündel zuführbar ist, wobei jeder Interferometer-Einheit jeweils eine Detektionseinheit und eine Signalverarbeitungs-Einheit nachgeordnet ist, um für jede Messachse eine absolute Positionsinformation bzgl. des jeweiligen Messreflektors zu bestimmen.

Dabei kann vorgesehen sein, dass ein phasenmoduliertes Teil-Strahlenbündel einer Lichtphasenamplituden-Ermittlungseinheit zuführbar ist, die die daraus bestimmte Lichtphasenamplitude den Signalverarbeitungseinheiten in den einzelnen Messachsen zur Weiterverarbeitung zuführt.

In einer bevorzugten Ausführungsform umfasst die Interferometer-Einheit eine Strahl-Aufspalteinheit, den entlang mindestens einer Messrichtung beweglichen Messreflektor, den stationären Referenzreflektor sowie eine Strahl-Vereinigungseinheit, wobei über die Strahl-Aufspalteinheit die Aufspaltung des phasenmodulierten Strahlenbündels in ein Mess- und ein Referenzstrahlenbündel erfolgt und über die Strahl-Vereinigungseinheit eine Überlagerung der vom Mess- und Referenzreflektor zurückreflektierten Mess- und Referenzstrahlenbündel zum Interferenzstrahlenbündel erfolgt.

Als besonders vorteilhaft erweist sich bei der erfindungsgemäßen Vorrichtung, dass der Aufwand zur Erzeugung eines Grobpositionssignals erheblich verringert werden kann. Es sind insbesondere keine zusätzlichen optischen Komponenten zur Ein- und Auskopplung der Lichtpulse erforderlich; ebenso entfallen zusätzliche elektronische Komponenten zur Lichterzeugung, Detektion, Verstärkung und Zeitmessung.

Da das Grobpositionssignal mit Hilfe der identischen Komponenten erzeugt wird wie die hochauflösenden Interferometersignale ist zudem eine zeitliche Konsistenz der verschiedenen Positionsinformationen ohne Zusatzmaßnahmen gewährleistet.

Ferner können mit der modulierten Mehrwellenlängen-Lichtquelle im Bedarfsfall auch mehrere Messachsen versorgt werden, während im Fall der Grobpositionssignal-Erzeugung über eine Laufzeitmessung hierzu separate optische und elektronische Komponenten für jede Messachse erforderlich sind.

Weitere Einzelheiten und Vorteile der vorliegenden Erfindung seien anhand der nachfolgenden Beschreibung von Ausführungsbeispielen der erfindungsgemäßen Vorrichtung in Verbindung mit den Figuren erläutert.

### KURZE BESCHREIBUNG DER ZEICHNUNGEN

Es zeigt

Figur 1    eine stark schematisierte Darstellung eines Ausführungsbeispiels der erfindungsgemäßen Vorrichtung;

Figur 2    eine schematisierte Darstellung der Detektions-Einheit aus dem Ausführungsbeispiel in Figur 1;

Figur 3    eine schematisierte Darstellung der Signalverarbeitungs-Einheit aus dem Ausführungsbeispiel in Figur 1;

Figur 4    die abgetasteten Phasenwerte bei einer Bewegung des Messreflektors aus dem Beispiel der Figur 1 mit konstanter Geschwindigkeit;

Figur 5    eine Darstellung der komplexen Amplituden der resultierenden Phasen- und Amplitudenmodulation im Ausführungsbeispiel der Figur 1;

Figur 6    eine Detail-Darstellung der Lichtphasenamplituden-Ermittlungseinheit aus dem Beispiel der Figur 1;

Figur 7    eine Detail-Darstellung der Signalverarbeitungs-Einheit der Lichtphasenamplituden-Ermittlungseinheit aus Figur 6;

Figur 8    eine stark schematisierte Darstellung einer mehrachsigen Messanordnung in Verbindung mit der erfindungsgemäßen Vorrichtung.

### BESCHREIBUNG DER AUSFÜHRUNGSFORMEN

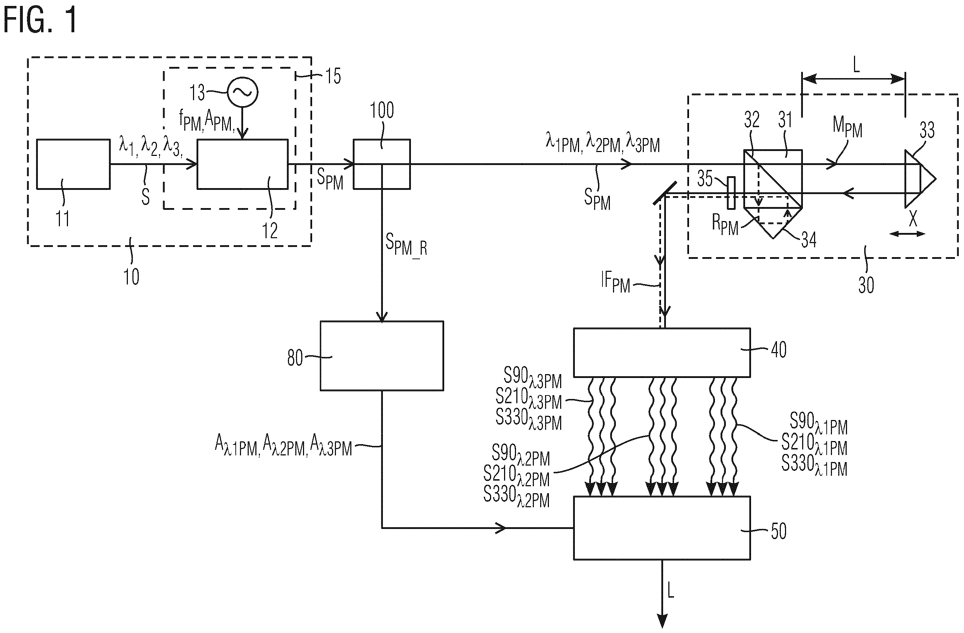

Ein Ausführungsbeispiel der erfindungsgemäßen Vorrichtung zur interferometrischen Abstandsmessung ist in Figur 1 in einer schematisierten Darstellung gezeigt. Die Vorrichtung umfasst eine Lichtquellen-Einheit 10, eine Interferometer-Einheit 30, eine Detektionseinheit 40, eine Signalverarbeitungs-Einheit 50 sowie eine Lichtphasenamplituden-Ermittlungseinheit 80. Mit Hilfe der erfindungsgemäßen Vorrichtung ist im vorliegenden Ausführungsbeispiel die hochpräzise Bestimmung einer absoluten Positionsinformation L bzw. eines Absolutabstands zwischen zwei - in der Figur nicht dargestellten - relativ zueinander beweglichen Objekten möglich. Im vorliegenden Beispiel ist eines der beiden Objekte mit dem zur Interferometer-Einheit 30 gehörenden, entlang der Messrichtung x beweglichen Messreflektor 33 verbunden, das andere der beiden Objekte mit den demgegenüber stationär angeordneten anderen Komponenten der Interferometer-Einheit 30.

Bei den beiden Objekten kann es sich beispielsweise um zueinander bewegliche Maschinenteile handeln, deren Absolutabstand mittels der erfindungsgemäßen Vorrichtung bestimmbar ist. Die mit Hilfe der erfindungsgemäßen Vorrichtung erzeugten Informationen bezüglich der absoluten Positionsinformation L können von einer übergeordneten Maschinensteuerung weiterverarbeitet werden.

Desweiteren ist es auch möglich, die erfindungsgemäße Vorrichtung in Laser-Trackern oder Laser-Tracern einzusetzen. In diesem Fall wird der Absolutabstand zwischen den stationären Komponenten der Interferometer-Einheit 30 und dem im Raum beweglichen Messreflektor 33 bestimmt.

Derartige Systeme können in Verbindung mit unterschiedlichsten Mess- und/oder Kalibrationsaufgaben eingesetzt werden. Darüber hinaus gibt es natürlich noch weitere Einsatzmöglichkeiten für die erfindungsgemäße Vorrichtung.

Bevor nachfolgend im Detail das erfindungsgemäße Vorgehen zur Bestimmung eines Grobpositionssignals $L_G$ sowie zur Ermittlung der absoluten Positionsinformation L beschrieben wird, sei anhand der Figuren zunächst das Gesamt-System und die Funktion der wichtigsten Komponenten desselbigen erläutert.

Die Lichtquellen-Einheit 10 der erfindungsgemäßen Vorrichtung umfasst eine Mehrwellenlängen-Lichtquelle 11, die ein Strahlenbündel S mit mindestens drei unterschiedlichen Wellenlängen $\lambda_i$ (i = 1, 2, 3) emittiert, welche jeweils eine geringe spektrale Linienbreite aufweisen. Als Mehrwellenlängen-Lichtquelle 11 ist hierbei ein Faserlaser vorgesehen, der mindestens drei verschiedene Bragg-Gitter umfasst, deren Gitterkonstanten auf die erzeugten Wellenlängen $\lambda_i$ (i = 1, 2, 3) abgestimmt sind. Zu weiteren Details der Mehrwellenlängen-Lichtquelle 11 und der Wahl geeigneter Wellenlängen $\lambda_i$ (i = 1, 2, 3) sei ausdrücklich auf die bereits eingangs erwähnte Druckschrift DE 10 2017 213 258 A1 verwiesen.

Das von der Mehrwellenlängen-Lichtquelle 11 gelieferte Strahlenbündel S erfährt über eine Modulations-Einheit 15 eine Phasenmodulation, wobei zumindest auf eine emittierte Wellenlänge $\lambda_i$ (i = 1, 2, 3) eine Phasenmodulation aufgeprägt wird; im dargestellten Ausführungsbeispiel ist darüberhinausgehend vorgesehen, auf alle drei emittierten Wellenlängen $\lambda_1, \lambda_2, \lambda_3$ eine derartige Phasenmodulation aufzuprägen. Die Modulations-Einheit 15 umfasst zu diesem Zweck einen Sinusgenerator 13, der einen elektrooptischen Modulator 12 mit einer definierten Modulationsfrequenz $f_{PM}$ und einer definierten Spannungsamplitude $A_{PM}$ ansteuert. Der elektrooptische Modulator 12 ist im vorliegenden Ausführungsbeispiel als integrierter, fasergekoppelter Modulator ausgebildet.

Die Modulationsfrequenz $f_{PM}$ des Sinusgenerators 13 wird vorzugsweise im Frequenzbereich [100 kHz .....10 MHz] gewählt; hierbei wird ferner berücksichtigt, dass zur Vermeidung von Messfehlern die Modulationsfrequenz $f_{PM}$ größer ist als im System auftretende mechanische Frequenzen (einige kHz) und akustische Frequenzen (einige hundert kHz). In einem konkreten Ausführungsbeispiel ist eine Modulationsfrequenz $f_{PM}$ = 1,5625 MHz vorgesehen.

Von der Lichtquellen-Einheit 10 wird somit ein phasenmoduliertes Strahlenbündel $S_{PM}$ emittiert, wobei die verschiedenen Wellenlängen $\lambda_i$ (i = 1, 2, 3) die eingeprägten Lichtphasenamplituden $A_{\lambda iPM}$ (i = 1, 2, 3) aufweisen; die Lichtphasenamplituden $A_{\lambda iPM}$ (i = 1, 2, 3) liegen im Bereich mehrerer Vielfacher von $\pi$ (= 180°). Im Verlauf der weiteren Beschreibung wird noch im Detail erläutert, wie die eingeprägte Phasenmodulation insbesondere zur Erzeugung eines Grobpositionssignals $L_G$ genutzt wird.

Über einen der Lichtquellen-Einheit 10 nachgeordneten Strahlabzweiger 100 in Form eines Faseroptik-Splitters wird ein Teil $S_{PM\_R}$ des phasenmodulierten Strahlenbündels $S_{PM}$ abgezweigt und der Lichtphasenamplituden-Ermittlungseinheit 80 zugeführt. Mit deren Hilfe werden die von der Modulationseinheit 15 eingeprägten Lichtphasenamplituden $A_{\lambda iPM}$ (i = 1, 2, 3) bestimmt und der Signalverarbeitungseinheit 50 zur Verfügung gestellt, die diese zur Erzeugung des Grobpositionssignals $L_G$ benötigt. Hinsichtlich Details zur Bestimmung und Verarbeitung dieser Größen sei ebenfalls auf die nachfolgende Beschreibung verwiesen.

Der nicht-abgezweigte Teil des phasenmodulierten Strahlenbündels $S_{PM}$ mit den phasenmodulierten Wellenlängen $\lambda_{iPM}$ (i = 1, 2, 3) gelangt in die Interferometer-Einheit 30, wo es mit Hilfe der Strahlaufspaltungs-Einheit 31, die als polarisierender Strahlteiler ausgeführt ist, in ein Messstrahlenbündel $M_{PM}$ und ein Referenzstrahlenbündel $R_{PM}$ aufgespalten wird. Das Messstrahlenbündel $M_{PM}$ propagiert nach der Aufspaltung in einem Messarm in Richtung eines mindestens entlang der Messrichtung x beweglichen Messreflektors 33 und erfährt dort eine Rückreflexion zurück in Einfallsrichtung. Das Referenzstrahlenbündel $R_{PM}$ propagiert nach der Aufspaltung in einem Referenzarm in Richtung eines stationären Referenzreflektors 34 und erfährt dort ebenfalls eine Rückreflexion zurück in Einfallsrichtung. Der Messreflektor 33 sowie der Referenzreflektor 34 sind im dargestellten Beispiel als retroreflektierende Tripelspiegel ausgebildet. Die vom Mess- und Referenzreflektor 33, 34 zurückreflektierten Mess- und Referenzstrahlenbündel $M_{PM}$, $R_{PM}$ gelangen dann in die als polarisierender Strahlteiler ausgeführte Strahlvereinigungs-Einheit 31 und überlagern sich dort interferierend in einem Interferenzstrahlenbündel $IF_{PM}$. Im dargestellten Ausführungsbeispiel der Figur 1 ist als Strahlaufspaltungs-Einheit 31 bzw. Strahlvereinigungs-Einheit 31 ein einziges Bauteil in Form eines StrahlteilerWürfels vorgesehen, in dem beide Einheiten gemeinsam ausgebildet sind. An der Strahlteiler- bzw. Strahlvereinigerfläche 32 des Strahlteilerwürfels erfolgt die Aufspaltung des phasenmodulierten Strahlenbündels $S_{PM}$ in Mess- und Referenzstrahlenbündel $M_{PM}$, $R_{PM}$ bzw. die Wiedervereinigung der Mess- und Referenzstrahlenbündel $M_{PM}$, $R_{PM}$ zum Interferenzstrahlenbündel $IF_{PM}$. Über den in diesem Zusammenhang verwendeten Index PM soll verdeutlicht werden, dass zusätzlich zur vom Abstand bzw. der absoluten Positionsinformation L abhängigen, inkrementellen Phasendifferenz zwischen dem Referenzstrahlenbündel $R_{PM}$ und dem Messstrahlenbündel $M_{PM}$ eine abstandsabhängige Modulation der Phasendifferenz vorliegt; im Verlauf der weiteren Beschreibung wird noch im Detail erläutert, wie daraus das Grobpositionssignal $L_G$ ermittelt wird. Das Interferenzstrahlenbündel $IF_{PM}$ durchläuft am Ausgang der Interferometer-Einheit 30 noch eine λ/4 Platte 35, die den s- und p-polarisierten Anteil des Interferenzstrahlenbündels $IF_{PM}$ zu einem rotierenden E-Feld-Vektor überlagert, dessen Rotationswinkel zur Auswertung herangezogen wird. Im vorliegenden Ausführungsbeispiel ist die Interferometer-Einheit 30 somit als polarisations-codiertes Interferometer ausgebildet.

Im Hinblick auf die Interferometer-Einheit 30 sei darauf hingewiesen, dass die in Figur 1 skizzierte Ausbildung in Form eines Michelson-Interferometers keinesfalls erfindungswesentlich ist; es können demnach auch alternative Interferometer-Varianten und/oder -Komponenten in der Interferometer-Einheit 30 der erfindungsgemäßen Vorrichtung eingesetzt werden. So wäre es z.B. auch möglich, Kugeln mit einem Brechungsindex n = 2 als Reflektoren einzusetzen, zwischen denen der Absolutabstand gemessen wird. Desweiteren können natürlich auch anderweitig ausgebildete Mess- und Referenzreflektoren eingesetzt werden, beispielsweise Planspiegel etc.. Ebenso könnte ein Mach-Zehnder-Interferometer mit getrennten Strahl-Aufspalt- und Strahl-Vereinigungseinheiten zur Aufspaltung und Vereinigung der Mess- und Referenzstrahlenbündel verwendet werden usw..

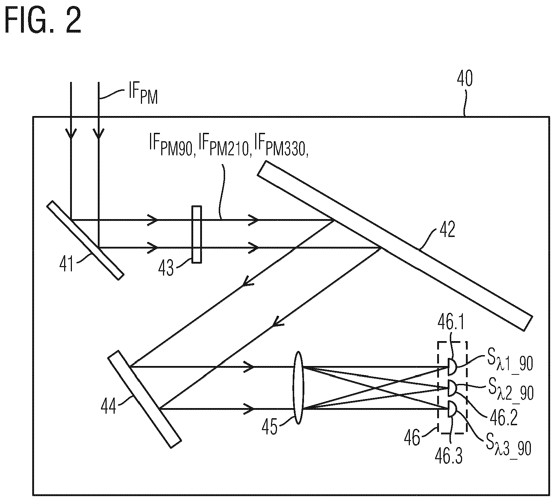

Das mit Hilfe der Interferometer-Einheit 30 erzeugte Interferenzstrahlenbündel $IF_{PM}$ propagiert dann in Richtung der Detektionseinheit 40. Über diese Einheit erfolgt eine Aufspaltung bzw. Weiterverarbeitung des Interferenzstrahlenbündels $IF_{PM}$ $\lambda_{iPM}$ dass ausgangsseitig pro phasenmodulierter Wellenlänge $\lambda_{iPM}$ (i = 1, 2, 3) jeweils mehrere elektrische, phasenverschobene Teil-Interferenzsignale $S90_{\lambda iPM}$, $S210_{\lambda iPM}$, $S330_{\lambda iPM}$ (i= 1, 2, 3) resultieren, nämlich pro phasenmodulierter Wellenlänge $\lambda_{iPM}$ (i = 1, $S90_{\lambda iPM}$, 3) je drei um 120° phasenverschobene Teil-Interferenzsignale $S90_{\lambda iPM}$, $S210_{\lambda iPM}$, $S330_{\lambda iPM}$ (i= 1, 2, 3). Am Ausgang der Detektionseinheit 40 liegen im vorliegenden Beispiel mit drei phasenmodulierten Wellenlängen $\lambda_{iPM}$ (i = 1, 2, 3) dann insgesamt neun Teil-Interferenzsignale $S90_{\lambda iPM}$, $S210_{\lambda iPM}$, $S330_{\lambda iPM}$ (i= 1, 2, 3) vor, die anschließend zur Positionsmessung weiterverarbeitet werden. Im Hinblick auf einen möglichen Aufbau der Detektionseinheit 40 sei auf die nachfolgende Beschreibung der Figur 2 verwiesen.

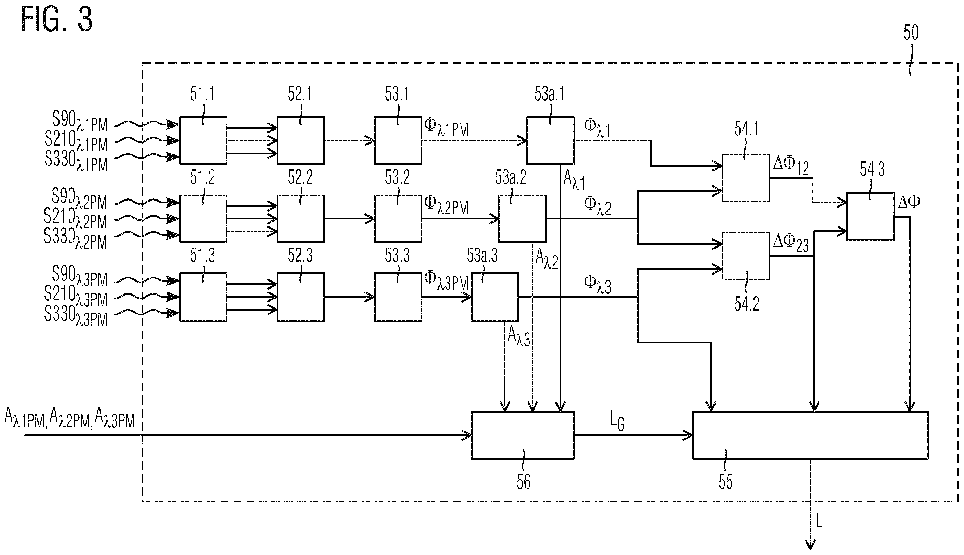

Wie in Figur 2 gezeigt, trifft das über die Interferometer-Einheit erzeugte Interferenzstrahlenbündel $IF_{PM}$, welches nach dem Durchlaufen der λ/4 Platte 35 aus einem rotierenden, linear polarisiertem E-Feld besteht, auf die Detektionseinheit 40. Dort erfolgt über ein erstes Aufspaltelement 41 und ein nachgeordnetes Polarisationselement 43 eine Aufspaltung des Interferenzstrahlenbündels $IF_{PM}$ in drei zueinander phasenverschobene Interferenzstrahlenbündel $IF_{PM90}$, $IF_{PM210}$ $IF_{PM330}$. Hierbei ist das erste Aufspaltelement 41 als Reflexionsphasengitter ausgebildet, welches das darauf einfallende Interferenzstrahlenbündel $IF_{PM}$ zunächst in drei räumlich getrennte Interferenzstrahlenbündel aufspaltet. Das Polarisationselement 43 umfasst drei lineare Polarisationsfilter mit um jeweils 60° gegeneinander verdrehten Polarisationsrichtungen und bewirkt, dass die drei vom Aufspaltelement 41 getrennten Interferenzstrahlenbündel in drei um jeweils 120° phasenverschobene Teil-Interferenzstrahlenbündel $IF_{PM90}$, $IF_{PM210}$ $IF_{PM330}$ umgewandelt werden. Die Aufspaltung in die drei phasenverschobenen Teil-Interferenzstrahlenbündel $IF_{PM90}$, $IF_{PM210}$ $IF_{PM330}$ über das erste Aufspaltelement 41 und das Polarisationselement 43 erfolgt senkrecht zur Zeichenebene, d.h. in der Darstellung der Figur 2 sind die nach dem Polarisationselement 43 vorliegenden, drei aufgespalten phasenverschobenen Teil-Interferenzstrahlenbündel $IF_{PM90}$, $IF_{PM210}$ $IF_{PM330}$ nicht einzeln erkennbar. Die drei phasenverschobenen Teil-Interferenzstrahlenbündel $IF_{PM90}$, $IF_{PM210}$ $IF_{PM330}$ treffen dann auf ein zweites Aufspaltelement 42, welches ebenfalls in Form eines Reflexionsphasengitters ausgebildet ist. Über das zweite Aufspaltelement 42 resultiert eine wellenlängenabhängige Aufspaltung der $\lambda_{iPM}$ phasenverschobenen Teil-Interferenzstrahlenbündel $IF_{PM90}$, $IF_{PM210}$ $IF_{PM330}$, so dass anschließend pro Wellenlänge $\lambda_{iPM}$ (i = 1, 2, 3) jeweils drei phasenverschobene Teil-Interferenzstrahlenbündel vorliegen, also insgesamt neun Teil-Interferenzstrahlenbündel, die in Figur 2 nicht einzeln dargestellt sind. Die Teil-Interferenzstrahlenbündel gelangen über ein Umlenkelement 44 und eine Abbildungsoptik 45 dann auf ein Detektorarray 46, das vorliegend neun elektrooptische Detektorelemente 46.1 - 46.3 umfasst, wobei in der Darstellung der Figur 3 lediglich ein Teil derselben erkennbar ist. Die Abbildungsoptik 45 ist hierbei als einzelne Linse oder als Linsenarray ausgebildet und kann alternativ auch kombiniert mit dem Umlenkelement 44 in einem einzigen Bauteil ausgebildet sein. Mit Hilfe des Detektorarrays 46 bzw. dessen Detektorelementen 46.1 - 46.9 werden die neun Teil-Interferenzstrahlenbündel erfasst und in neun elektrische Teil-Interferenzsignale $S90_{\lambda iPM}$, $S210_{\lambda iPM}$, $S330_{\lambda iPM}$ (i = 1, 2, $S210_{\lambda iPM}$, umgewandelt, die dann in der Signalverarbeitungseinheit weiterverarbeitet werden. In Figur 3 sind dabei von den insgesamt neun erzeugten Teil-Interferenzsignalen $S90_{\lambda iPM}$, $S210_{\lambda iPM}$, $S330_{\lambda iPM}$ (i = 1, 2, 3) lediglich die drei $S210_{\lambda iPM}$, $S_{\lambda 1\_90}$, $S_{\lambda 2\_90}$,

$S_{\lambda3\_90}$ dargestellt.

Die Weiterverarbeitung der Teil-Interferenzsignale $S90_{\lambda iPM}$, $S210_{\lambda iPM}$, $S330_{\lambda iPM}$ (i= 1, 2, 3) erfolgt anschließend in der nur schematisch in Figur 1 angedeuteten $\lambda_{iPM}$ 50. Diese ist dazu eingerichtet, aus den Teil-Interferenzsignalen $S90_{\lambda iPM}$, $S210_{\lambda iPM}$, $S330_{\lambda iPM}$ (i = 1, 2, 3) unterschiedlicher phasenmodulierter Wellenlängen $\lambda_{iPM}$ (i = 1, 2, 3) ein Grobpositionssignal $L_G$ bezüglich des beweglichen Messreflektors 33 zu erzeugen und über ein Mehrwellenlängen-Schwebungsverfahren schrittweise die absolute Positionsinformation L zu ermitteln.

Nachfolgend sei das Vorgehen zur Bestimmung des Grobpositionssignals $L_G$ gemäß der vorliegenden Erfindung erläutert. Maßgeblich hierfür ist die dem Strahlenbündel S eingeprägte Phasenmodulation, die im ausgewerteten Positionssignal der Interferometer-Einheit 30 zu einer abstandsabhängigen Modulation der Phase und der Amplitude führt. Das heißt, es sind sowohl die Amplitude der Modulation als auch deren Phase in Bezug auf das Ansteuersignal des elektrooptischen Modulators 12 abstandsabhängig. Die Bestimmung des Grobpositionssignals $L_G$ kann hierbei im wesentlichen mit den vorhandenen Hardware-Komponenten der Interferometer-Einheit 30, der Detektions-Einheit 40 und der Signalverarbeitungs-Einheit 50 erfolgen. Im Ausführungsbeispiel der Figur 1 ist darüber hinaus lediglich noch die Lichtphasenamplituden-Ermittlungseinheit 80 vorgesehen, die zur Ermittlung der durch die Modulations-Einheit 15 eingeprägten Lichtphasenamplituden $A_{\lambda iPM}$ (i = 1, 2, 3) bei den verschiedenen Wellenlängen $\lambda_i$ (i = 1, 2, 3) dient, welche zur Bestimmung des Grobpositionssignals $L_G$ herangezogen werden.

Das erfindungsgemäße Vorgehen zur Bestimmung des Grobpositionssignals $L_G$ wird nachfolgend im Detail erläutert.

Der durch die Modulations-Einheit 15 erzeugte zeitabhängige, modulierte Phasenanteil $P_{\lambda iR}$ (t) einer der Wel-lenlängen $\lambda_i$; i = 1, 2, 3 im Referenzstrahlenbündel $R_{PM}$, wird angenommen als

$$P_{\lambda iR}(t) = A_{\lambda iPM} * \sin(2 * \pi * f_{PM} * t).$$

Mit $A_{\lambda iPM}$ (i = 1, 2, 3) wird nachfolgend die durch die Modulations-Einheit 15 eingeprägte Lichtphasenamplitude bezeichnet, $f_m$ gibt die Modulationsfrequenz des elektrooptischen Modulators 12 an.

Da der zeitabhängige, modulierte Phasenanteil $P_{\lambda iM}(t)$ im Messstrahlenbündel $M_{PM}$ zur Phasenlage im Referenzstrahlenbündel $R_{PM}$ um die Laufzeit des Lichtes, die für die durchlaufene Länge 2 x L im Messarm benötigt wird, verzögert ist, ergibt sich dafür

$$P_{\lambda iM}(t) = A_{\lambda iPM} * \sin\left(2 * \pi * f_{PM} * \left(t - \frac{2L}{c}\right)\right).$$

Mit c wird in dieser Beziehung c die Geschwindigkeit des Lichtes im Messmedium bezeichnet, L gib die absolute Positionsinformation in Bezug auf den Messreflektor 33 bzw. die in Figur 1 angedeutete Absolutdistanz zwischen dem Messreflektor 33 und der Strahl-Aufspalteinheit 31 an.

Die zeitabhängige, modulierte Phasendifferenz $\Delta P_{\lambda i}(t)$ zwischen dem Referenz- und dem Messstrahlenbündel $R_{PM}$, $M_{PM}$ ergibt sich damit zu:

$$\Delta P_{\lambda i}(t) = A_{\lambda iPM} * \sin\left(2 * \pi * f_{PM} * \left(t - \frac{2L}{c}\right)\right) - A_{\lambda iPM} * \sin(2 * \pi * f_{PM} * t).$$

Mit Hilfe der trigonometrischen Beziehung

$$a * \sin(x + \alpha) + b * \sin(x + \beta) = \sqrt{a^2 + b^2 + 2ab * \cos(\alpha - \beta)} * \sin(x + \delta)$$

$$\delta = atan2(\, a * \cos(\alpha) + b * \cos(\beta), a * \sin(\alpha) + b * \sin(\beta))$$

und dem Ersetzen der Parameter a, b, $\alpha$, $\beta$, x in dieser Beziehung in folgender Art und Weise

$$a = A_{\lambda iPM}, \, b = -A_{\lambda iPM}, \, \alpha = 2 * \pi * f_{PM} * \left(-\frac{2L}{c}\right), \, \beta = 0 \text{ und } x = 2 * \pi * f_{PM} * t,$$

ergibt sich die Positionsphasenamplitude $A_{\lambda i}$ in Abhängigkeit der absoluten Positionsinformation L zu

$$A_{\lambda i} =$$

$$\sqrt{a^2 + b^2 + 2ab * \cos(\alpha - \beta)} = \sqrt{2A_{\lambda iPM}^2 - 2A_{\lambda iPM}^2 * \cos\left(2 * \pi * f_{PM} * \left(-\frac{2L}{c}\right)\right)}.$$

Diese Beziehung kann vereinfacht werden zu

$$A_{\lambda i} = \sqrt{2}A_{\lambda iPM} * \sqrt{1 - \cos\left(2\pi * f_{PM} * \frac{2L}{c}\right)}.$$

Durch Anwendung der Beziehung

$$\left|\sin\frac{x}{2}\right| = \sqrt{\frac{1 - \cos x}{2}}$$

folgt schließlich für die Positionsphasenamplitude $A_{\lambda i}$

$$A_{\lambda i} = 2A_{\lambda iPM} * \left|\sin\left(2\pi * f_{PM} * \frac{L}{c}\right)\right|.$$

Die Phasenlage $\delta_{\lambda i}$ (i = 1, 2, 3) der zeitabhängigen Phasendifferenz bezüglich des Ansteuersignales des elektrooptischen Modulators 12 ergibt sich damit gemäß

$$\delta_{\lambda i} = atan2(a * \cos(\alpha) + b * \cos(\beta), a * \sin(\alpha) + b * \sin(\beta)) = atan2(A_{\lambda iPM} *$$

$$\cos\left(2 * \pi * f_{PM} * \left(-\frac{2L}{c}\right) - A_{\lambda iPM}, A_{\lambda iPM} * \sin\left(2 * \pi * f_{PM} * \left(-\frac{2L}{c}\right)\right)\right).$$

Diese Beziehung kann noch vereinfacht werden zu

$$\delta_{\lambda i} = atan2\left(\cos\left(2 * \pi * f_{PM} * \left(-\frac{2L}{c}\right)\right) - 1, \sin\left(2 * \pi * f_{PM} * \left(-\frac{2L}{c}\right)\right)\right).$$

Durch weitere Umformung ergibt sich dann

$$\delta_{\lambda i} = -2\pi * f_{PM} * \frac{L}{c} - \frac{\pi}{2}$$

Damit resultiert im Interferometer zusätzlich zur inkrementellen, abstandsabhängigen Phasendifferenz zwischen dem Messstrahlenbündel $M_{PM}$ und dem Referenzstrahlenbündel $R_{PM}$ eine sinusförmige, zeit- und längenabhängige Phasendifferenz $\Delta P_{\lambda i}$ (t); i = 1, 2, 3 gemäß der Beziehung:

$$\Delta P_{\lambda i}(t) = A_{\lambda i} * \sin(2 * \pi * f_{PM} * t + \delta_{\lambda i})$$

In der Detektions-Einheit 40 werden - wie vorstehend erläutert - die einzelnen Wellenlängen $\lambda_i$ (i = 1, 2, 3) separiert und je Wellenlänge $\lambda_i$ (i = 1, 2, 3) drei elektrische, um 120° phasenverschobene Teil-Interferenzsignale $S90_{\lambda iPM}$, $S210_{\lambda iPM}$, $S330_{\lambda iPM}$ (i = 1, 2, 3) erzeugt. Diese Signale werden der Signalverarbeitungs-Einheit 50 zur Verfügung gestellt.
In der Signalverarbeitungs-Einheit 50 werden die Teil-Interferenzsignale $S90_{\lambda iPM}$, $S210_{\lambda iPM}$, $S330_{\lambda iPM}$ (i = 1, 2, 3) zunächst über Verstärker 51.1 - 51.3 verstärkt und mit Hilfe von A/D-Wandlern 52.1 - 52.3 digitalisiert. Für jede phasenmodulierte Wellenlänge $\lambda_{iPM}$ (i = 1, 2, 3) erfolgt dann über die Phasenberechnungseinheiten 53.1 - 53.3 die Berechnung eines modulierten Phasenwertes $\Phi_{\lambda iPM}$ (i = 1, 2, 3). Die Phasenwerte $\Phi_{\lambda iPM}$ (i = 1, 2, 3) weisen durch die Phasenmodulation des Lichtes jeweils einen mit der Modulationsfrequenz $f_{PM}$ und den Positionsphasenamplituden $A_{\lambda i}$

(i = 1, 2, 3) modulierten Anteil bzw. eine sinusförmige, zeit- und längenabhängige Phasendifferenz $\Delta P_{\lambda i}$ (t); i = 1, 2, 3 $\Delta P_{\lambda i}(t)$ auf. In den Demodulationseinheiten 53a.1 - 53a.3 werden die Positionsphasenamplituden $A_{\lambda i}$ (i = 1, 2, 3) bestimmt und die unmodulierten Phasenwerte $\Phi_{\lambda i}$ (i = 1, 2, 3) generiert. Aus den Positionsphasenamplituden $A_{\lambda i}$ (i = 1, 2, 3) wird dann in der Grobpositionsbestimmungs-Einheit 56 ein absolutes Grobpositionssignal $L_G$ bestimmt, das der Positionsbestimmungs-Einheit 55 zugeführt wird.

Die weitere Bestimmung der absoluten Positionsinformation L aus den unmodulierten Phasenwerten $\Phi_{\lambda i}$ (i = 1, 2, 3) und dem Grobpositionssignal $L_G$ erfolgt anschließend gemäß dem bereits in der DE 10 2017 213 258 A1 vorgeschlagenen Vorgehen; in diesem Zusammenhang sei ausdrücklich auf diese Druckschrift verwiesen. Hierzu werden aus den unmodulierten Phasenwerten $\Phi_{\lambda i}$ (i = 1, 2, 3) mit Hilfe der Differenzphasenberechnungs-Einheiten 54.1 - 54.3 die zu verschiedenen synthetischen Wellenlängen gehörenden Differenzphasen $\Delta\Phi_{12}$, $\Delta\Phi_{23}$ sowie $\Delta\Phi$ ermittelt und der Positionsbestimmungs-Einheit 55 übergeben.

In der Positionsbestimmungs-Einheit 55 erfolgt dann auf Grundlage der zugeführten Signale $L_G$ sowie $\Delta\Phi$, $\Delta\Phi_{23}$ und $\Phi_{\lambda 3}$ in kaskadierter Form die Bestimmung der absoluten Positionsinformation L. Auch hierzu sei ausdrücklich auf die detaillierte Beschreibung dieses Vorgehens in der DE 10 2017 213 258 A1 verwiesen.

Im Folgenden wird nunmehr erläutert, wie in den Demodulationseinheiten 53a.1 - 53.a3 die Positionspha-senamplituden $A_{\lambda i}$ (i = 1, 2,3) aus den modulierten Phasenwerten $\Phi_{\lambda iPM}$ (i = 1, 2, 3) bestimmt werden, die für die Bestimmung des Grobpositionssignals $L_G$ verwendet werden und hierzu an die Grobpositionsbestimmungs-Einheit 56 übergeben werden.

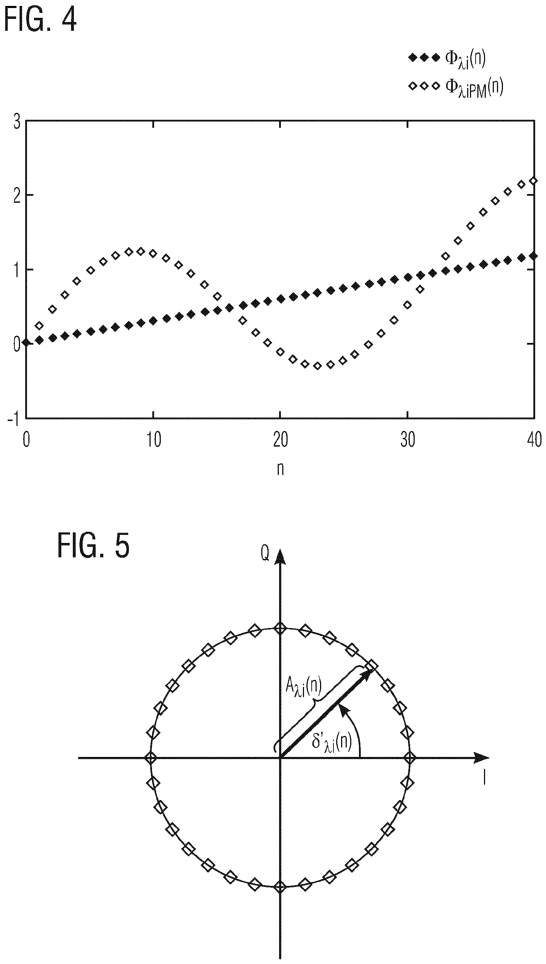

Jede Phasenberechnungs-Einheit 53.1 - 53.3 in der Signalverarbeitungs-Einheit 50 liefert für jeden Abtastzeitpunkt n einen modulierten Phasenwert $\Phi_{\lambda iPM}(n)$ (i= 1, 2, 3). In Figur 4 sind beispielhaft die abgetasteten, modulierten Phasenwerte $\Phi_{\lambda iPM}$ (n) (i = 1, 2, 3) sowie die unmodulierten Phasenwerte $\Phi_{\lambda i}$ (n) (i = 1, 2, 3) zu den Abtastzeitpunkten n bei einer Bewegung des Messreflektors 33 mit konstanter Geschwindigkeit dargestellt. Die Abtastfrequenz $f_A$ wurde in diesem Beispiel gemäß $f_A = 32 \cdot f_{PM}$ gewählt.

Nun soll allgemein gelten

$$f_A = k * 8 * f_{PM}$$

mit $k \in \mathbb{N}$

Mit Hilfe der Beziehungen

$$I_{\lambda i}(n) = \Phi_{\lambda iPM}(n - k) - \frac{\Phi_{\lambda iPM}(n - 3k) + \Phi_{\lambda iPM}(n + k)}{2}$$

$$Q_{\lambda i}(n) = \Phi_{\lambda iPM}(n + k) - (\Phi_{\lambda iPM}(n - k) + \Phi_{\lambda iPM}(n + 3k))/2$$

lassen sich nun die Inphase-Werte $I_{\lambda i}(n)$ (i = 1, 2, 3) und die Quadratur-Werte $Q_{\lambda i}(n)$ (i = 1, 2, 3) für die komplexen Amplituden zu jedem Abtastzeitpunkt n berechnen. Hierbei bezeichnen die Inphase-Werte $I_{\lambda i}(n)$ (i = 1, 2, 3) den Realteil der komplexen Amplituden und die Quadratur-Werte $Q_{\lambda i}(n)$ (i = 1, 2, 3) den Imaginärteil der komplexen Amplituden. In Figur 5 ist ein Beispiel mit 32 Abtastwerten in der komplexen Zahlenebene, d.h. in der sog. IQ-Ebene, dargestellt. Der Betrag der Positionsphasenamplitude $A_{\lambda i}(n)$ (i = 1, 2, 3) zum Abtastzeitpunkt n beträgt damit

$$A_{\lambda i}(n) = \sqrt{I_{\lambda i}(n)^2 + Q_{\lambda i}(n)^2}$$

Ebenso kann die Phasenlage $\delta_{\lambda i}$ (n) (i = 1, 2, 3) der Modulation bezüglich des Ansteuersignals des elektrooptischen Modulators 12 zum Abttastzeitpunkt n berechnet werden aus

$$\grave{\delta}_{\lambda i}(n) = atan2(I_{\lambda i}(n), Q_{\lambda i}(n))$$

$$\delta_{\lambda i}(n) = \grave{\delta}_{\lambda i}(n) - \frac{2\pi}{8k} * (n \, mod \, 8k).$$

Hierbei bezeichnet $\delta'_{\lambda i}(n)$ (i = 1, 2, 3) den Winkel des komplexen Zeigers aus $I_{\lambda i}(n)$ und $Q_{\lambda i}(n)$ zum Abtastzeitpunkt n

Um $A_{\lambda i}(n)$ und $\delta_{\lambda i}(n)$ nach den oben beschriebenen Formeln berechnen zu können, müssen zusätzliche Bedingungen erfüllt sein. So muss die Abtastung zeitlich äquidistant und auf allen Signalen zeitgleich erfolgen. Ferner müssen die Abtastfrequenz $f_A$ und Modulationsfrequenz $f_{PM}$ phasenstarr zueinander sein, was beispielsweise durch Ableitung beider Frequenzen aus einer gemeinsamen Referenzfrequenz sichergestellt werden kann.

Durch geeignete Mittelungsverfahren mehrerer komplexer Amplitudenwerte zu verschiedenen Abtastzeitpunkten kann zusätzlich das Rauschen reduziert werden.

Im Anschluss wird erläutert, wie über die Demodulations-Einheiten 53.a1 - 53a.3 die unmodulierten Phasenwerte $\Phi_{\lambda i}(n)$ (i= 1, 2, 3) aus den modulierten Phasenwerten $\Phi_{\lambda iPM}(n)$ (i = 1, 2, 3) gewonnen werden, die für die Weiterverarbeitung in den Differenzphasen-Berechnungseinheiten 54.1 - 54.3 erforderlich sind.

So können etwa die unmodulierten Phasenwerte $\Phi_{\lambda i}f(n)$ (i = 1, 2, 3) für jeden Abtastzeitpunkt n beispielsweise durch folgende Vorschrift ermittelt werden:

$$\Phi_{\lambda i}(n) = (\Phi_{\lambda iPM}(n - 2k) + \Phi_{\lambda iPM}(n + 2k))/2$$

Nachfolgend wird nunmehr die Bestimmung des erforderlichen Grobpositionssignals $L_G$ aus den der Grobpositionsbestimmungs-Einheit 56 zugeführten Amplitudenwerten $A_{\lambda i}$ (i = 1, 2, 3) bzw. $A_{\lambda iPM}$ (i = 1, 2, 3) beschrieben.

Durch Auflösen der Gleichung

$$A_{\lambda i} = 2A_{\lambda iPM} * |\sin(2\pi * f_{PM} * \frac{L}{c})|.$$

nach L, ergibt sich für das Grobpositionssignal $L_G$ die folgende Beziehung:

$$L_G = \frac{c}{2\pi * f_{PM}} * \mathrm{asin}\left(\frac{A_{\lambda i}}{2A_{\lambda iPM}}\right)$$

Diese Beziehung wird in der Grobpositionsbestimmungs-Einheit 56 zur Bestimmung des Grobpositionssignals $L_G$ herangezogen.

Prinzipiell wäre für die Ermittlung der Grobpositionssignals $L_G$ die Positionsphasenamplitude $A_{\lambda i}$ (i= 1, 2, 3) einer einzigen Wellenlänge $\lambda_i$ (i = 1, 2, 3) ausreichend. Es erweist sich jedoch als vorteilhaft, die Positionsphasenamplituden $A_{\lambda i}$ (i= 1, 2, 3) aller drei Wellenlängen $\lambda_i$ (i = 1, 2, 3) auszuwerten und daraus den arithmetischen Mittelwert bezüglich der gewonnenen Grobpositionen zu bilden; auf diese Art und Weise kann das Rauschen des Grobpositionssignals $L_G$ verringert werden.

Aus der Beziehung, die die Abhängigkeit der Positionsphasenamplituden $A_{\lambda i}$ (i = 1, 2, 3) vom Grobpositionssignal $L_G$ beschreibt, nämlich

$$A_{\lambda i} = 2A_{\lambda iPM} * |\sin(2\pi * f_{PM} * \frac{L_G}{c})|.$$

ist ersichtlich, dass eine eindeutige Bestimmung des Grobpositionssignals $L_G$ aus der Positionsphasenamplituden $A_{\lambda i}$ (i = 1, 2, 3) nur in einem Bereich möglich ist, in dem das Argument des Sinus zwischen 0 und $\pi/2$ liegt.

Es gilt deshalb:

$$2\pi * f_{PM} * \frac{L}{c} < \frac{\pi}{2}$$

Also

$$0 \leq L < \frac{c}{4f_{PM}}$$

Es ist jedoch auch möglich das Grobpositionssignal $L_G$ aus dem Phasenwinkel $\delta_{\lambda i}$ zu bestimmen. Durch Auflösen

der Gleichung

$$\delta_{\lambda i} = -2\pi * f_{PM} * \frac{L}{c} - \frac{\pi}{2}$$

nach der Messlänge bzw. absoluter Positionsinformation L kann das Grobpositionssignal $L_G$ berechnet werden aus

$$L_G = -\frac{c}{2\pi * f_{PM}} * \left(\frac{\pi}{2} + \delta_{\lambda i}\right).$$

Eine Bestimmung des Grobpositionssignals $L_G$ aus dem Phasenwinkel $\delta_{\lambda i}$ ist natürlich nur für Werte von $L_G >$ 0 bis $L_G < \frac{c}{2f_{PM}}$ möglich, da bei sehr kleinen Positionsphasenamplituden $A_{\lambda i}$ (i = 1, 2, 3) keine Phasenbestimmung möglich ist. Die genaueste Phasenbestimmung ist um den Bereich $L_G = \frac{c}{f_{PM}}$ möglich, da hier die Positionsphasenamplitude $A_{\lambda i}$ (i = 1, 2, 3) maximal wird.

Je nach Messlänge kann dann das Grobpositionssignal $L_G$ somit entweder aus der Positionsphasenamplitude $A_{\lambda i}$ oder dem Phasenwinkel $\delta_{\lambda i}$ bestimmt werden.

Der eindeutige Messbereich für das Grobpositionssignal $L_G$ kann damit z.B. auf

$$0 \leq L_G < \frac{c}{2f_{PM}}$$

erweitert werden.

Für eine Bestimmung des Grobpositionssignals $L_G$ aus der bereits oben aufgeführten Beziehung

$$L_G = \frac{c}{2\pi * f_{PM}} * \operatorname{asin}\left(\frac{A_{\lambda i}}{2A_{\lambda iPM}}\right)$$

ist die genaue Kenntnis der durch die Modulationseinheit 15 eingeprägten Lichtphasenamplituden $A_{\lambda iPM}$ (i = 1, 2, 3) der einzelnen Wellenlängen notwendig. Im Ausführungsbeispiel der Figur 1 erfolgt die Bestimmung dieser Größen über eine kontinuierliche Messung mit Hilfe der Lichtphasenamplituden-Ermittlungseinheit 80. Diese kann alternativ zur Darstellung in Figur 1 auch in die Lichtquellen-Einheit intergiert sein.

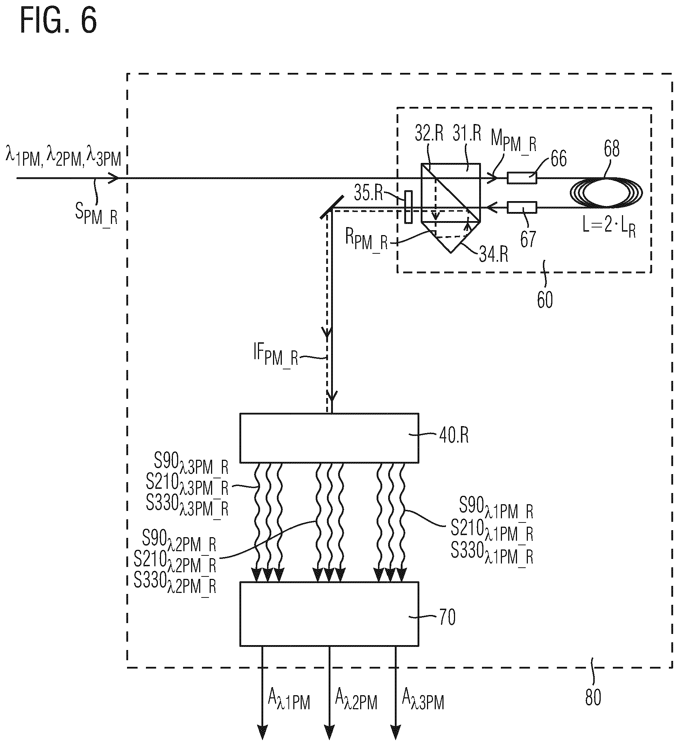

Anhand der Darstellung in Figur 6 werden nachfolgend der Aufbau und das Funktionsprinzip der in diesem Ausführungsbeispiel verwendeten Lichtphasenamplituden-Ermittlungseinheit 80 erläutert.

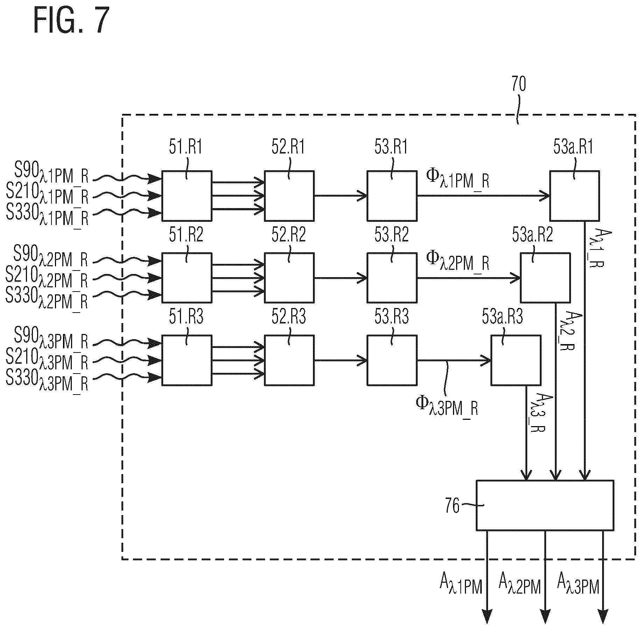

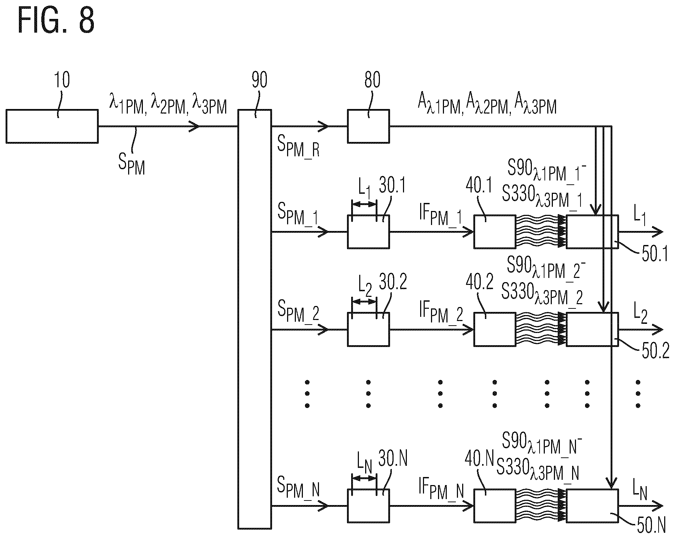

Wie bereits erwähnt, wird über einen Strahlabzweiger 100 ein Teil der optischen Leistung aus dem phasenmoduliertem Strahlenbündel $S_{PM}$ ausgekoppelt und als Strahlenbündel $S_{PM\_R}$ der Lichtphasenamplituden-Ermittlungseinheit 80 zugeführt. Diese umfasst gemäß der Darstellung in Figur 8 eine Referenzinterferometer-Einheit 60, eine Detektionseinheit 40.R und eine Signalverarbeitungs-Einheit 70. Die Funktionsweise der Referenzinterferometer-Einheit 60 entspricht prinzipiell der Funktionsweise der Interferometer-Einheit 30 aus Figur 1. Allerdings wird hier das Messstrahlenbündel $M_{PM\_R}$ über einen Faserkoppler 66 in die Referenzfaser 68 mit der optischen Weglänge 2 x $L_R$ eingekoppelt und mit einem Faserkollimator 67 wieder ausgekoppelt; LR entspricht dabei der Weglängendifferenz zwischen dem Messstrahlenbündel und dem Referenzstrahlenbündel in der Referenzinterferometer-Einheit 60. Alternativ hierzu kann die für die Referenzinterferometer-Einheit 60 erforderliche, hinreichend konstante Weglängendifferenz zwischen dem Messstrahlenbündel $M_{PM\_R}$ und dem Referenzstrahlenbündel $R_{PM\_R}$ auch auf andere Art und Weise eingestellt werden. Der Referenzinterferometer-Einheit 60 sind die Detektions-Einheit 40.R und die Signalverarbeitungs-Einheit 70 nachgeordnet, über die die Positionsphasenamplituden $A_{\lambda i\_R}$ (i = 1, 2, 3) der einzelnen Wellenlängen ermittelt werden. Dies erfolgt hier analog zur Ermittlung der Positionsphasenamplitude $A_{\lambda i}$ (i = 1, 2, 3) in der Signalverarbeitungs-Einheit 50. Der Aufbau der hierzu verwendeten Signalverarbeitungs-Einheit 70 ist in Figur 7 dargestellt; die darüber vorgesehene Signalverarbeitung entspricht i.w. dem Vorgehen, das oben bereits in Verbindung mit der Signalverarbeitungs-Einheit 50 anhand von Figur 3 erläutert wurde.

So werden in der Signalverarbeitungs-Einheit 70 dann die von der Modulations-Einheit 15 eingeprägten Licht-

phasenamplituden $A_{\lambda iPM}$ (i = 1, 2, 3) der einzelnen Wellenlängen $\lambda_i$ (i = 1, 2, 3) bestimmt, indem zunächst die Gleichung

$$A_{\lambda i\_R} = 2A_{\lambda iPM} * |\sin(2\pi * f_{PM} * \frac{L_R}{c})|.$$

nach $A_{\lambda iPM}$ aufgelöst wird.

Anschließend können die durch die Modulations-Einheit 15 eingeprägten Lichtphasenamplituden $A_{\lambda iPM}$ (i = 1, 2, 3) aus der Beziehung

$$A_{\lambda iPM} = \frac{A_{\lambda i\_R}}{2\,|\sin\left(2\pi * f_{PM} * \frac{L_R}{c}\right)|}$$

berechnet und am Ausgang der Lichtphasenamplituden-Ermittlungseinheit 80 zur Weiterverarbeitung bereitgestellt werden.

Um in der Referenzinterferometer-Einheit 60 den Interpolationsfehler durch Bauteil- und Justagetoleranzen zu minimieren, ist es vorteilhaft einen Signalabgleich durchzuführen. Dabei muss die Weglängendifferenz $L_R$ in der Referenzinterferometer-Einheit 60 um mindestens eine halbe Wellenlänge variiert werden. Dies kann beispielsweise durch eine Variation einer auf die Referenzfaser 68 ausgeübten Kraft oder durch eine Variation der Temperatur der Referenzfaser 68 erfolgen.

Die erfindungsgemäße Vorrichtung kann beispielsweise in einer Messanordnung zur absoluten Längenmessung zum Einsatz kommen, das aus einer Mehrzahl von Laser-Trackern besteht. Mit einer derartigen Messanordnung kann über bekannte Multilaterationsverfahren die Absolutposition oder Absolutpose eines Objekts im Raum bestimmt werden. Eine entsprechende Messanordnung ist in Figur 8 in stark schematisierter Form gezeigt. Das von der Lichtquellen-Einheit 10 erzeugte phasenmodulierte Strahlenbündel $S_{PM}$ gelangt dabei zunächst auf ein Aufspalt-Element 90 in Form eines Fasersplitters. Darüber erfolgt eine Aufspaltung in mehrere phasenmodulierte Teil-Strahlenbündel $S_{PM\_R}$ und $S_{PM\_j}$ (j = 1, 2, ...N). Ein Teil-Strahlenbündel $S_{PM\_R}$ wird dann einer Lichtphasenamplituden-Ermittlungseinheit 80 zugeführt, die restlichen Teil-Strahlenbündel $S_{PM\_j}$ (j = 1, 2, ...N) einer Mehrzahl von N Interferometer-Einheiten 30.1 ...30.N, die jeweils unterschiedlichen Messachsen bzw. Laser-Trackern zugeordnet sind. Jeder Interferometer-Einheit 30.1 ...30.N ist analog zum oben erläuterten Ausführungsbeispiel jeweils eine Detektions-Einheit 40.1... 40N sowie eine Signalverarbeitungs-Einheit 50.1 .. 50.N nachgeordnet, um derart für jede Messachse eine absolute Positionsinformation L1 ... LN bezüglich des jeweiligen Messreflektors zu bestimmen.

Neben den erläuterten Ausführungsbeispielen und Varianten der erfindungsgemäßen Vorrichtung gibt es im Rahmen der vorliegenden Erfindung selbstverständlich noch weitere Ausgestaltungsmöglichkeiten.

So ist es möglich, anstelle der laufenden Bestimmung der Lichtphasenamplituden $A_{\lambda iPM}$ (i = 1, 2, 3) mit Hilfe der oben erläuterten Lichtphasenamplituden-Ermittlungseinheit die über die Phasenmodulation eingeprägten Amplituden $A_{\lambda iPM}$ (i = 1, 2, 3) vor dem Messbetrieb mit einer geeigneten Methode einmalig zu ermitteln und diese Größen dann als Konstanten der Signalverarbeitungs-Einheit zur Weiterverarbeitung zur Verfügung zu stellen. Eine solche Ermittlung kann z.B. bei der Fertigung erfolgen, später können zyklische Neukalibrierungen vorgenommen werden.

Ferner ist auch eine Bestimmung der über die Phasenmodulation eingeprägten Amplituden $A_{\lambda iPM}$ (i = 1, 2, 3) im Messbetrieb möglich. Dazu müssen mindestens zwei unterschiedliche Längen bzw. Absolutpositionen L_1 und L_2 eingestellt werden. Während der Bewegung zwischen den beiden Absolutpositionen L_1 und L_2 darf keine Strahlunterbrechung im Interferometer erfolgen, sodass die Messung des unmodulierten Phasenwerts $\Phi_{\lambda i}$ ungestört bleibt. Die zugehörigen unmodulierten Phasenwerte $\Phi_{\lambda i}\_1$ (i = 1,, 2, 3) und $\Phi_{\lambda i}\_2$ (i = 1, 2, 3) sowie die Positionsphasenamplituden $A_{\lambda i}\_1$ (i = 1, 2, 3) und $A_{\lambda i}\_2$ (i = 1, 2, 3) werden gemessen und abgespeichert. Es kann dann folgendes Gleichungssystem aufgestellt werden:

$$L\_1 = \frac{c}{2\pi * f_{PM}} * \text{asin}\left(\frac{A_{\lambda i}\_1}{2A_{\lambda iPM}}\right)$$

$$L\_2 = \frac{c}{2\pi * f_{PM}} * \text{asin}\left(\frac{A_{\lambda i}\_2}{2A_{\lambda iPM}}\right)$$

Zusätzlich kann gesetzt werden:

**EP 4 050 301 B1**

$$L\_1 = L\_0 + \Phi_{\lambda i\_}1 * \frac{\lambda i}{2}$$

$$L\_2 = L\_0 + \Phi_{\lambda i\_}2 * \frac{\lambda i}{2}$$

Dabei ist L_0 eine unbekannte Differenz zwischen inkrementaler und absoluter Positionsinformation.

Es resultiert dann das Gleichungssystem

$$L\_0 + \Phi_{\lambda i\_}1 * \frac{\lambda i}{2} = \frac{c}{2\pi * f_{PM}} * \mathrm{asin}\left(\frac{A_{\lambda i\_}1}{2A_{\lambda iPM}}\right)$$

$$L\_0 + \Phi_{\lambda i\_}2 * \frac{\lambda i}{2} = \frac{c}{2\pi * f_{PM}} * \mathrm{asin}\left(\frac{A_{\lambda i\_}2}{2A_{\lambda iPM}}\right).$$

Dieses Gleichungssystem enthält nur die beiden Unbekannten L_0 und $A_{\lambda iPM}$, nach denen mit einem geeigneten Verfahren aufgelöst werden kann. Im Messbetrieb kann dieses Vorgehen wiederholt angewendet und somit auch zur Kompensation langsamer Veränderungen der Lichtphasenamplituden $A_{\lambda iPM}$ (i = 1, 2, 3) angewendet werden.

## Patentansprüche

1. Vorrichtung zur interferometrischen Abstandsmessung mit

   - einer Mehrwellenlängen-Lichtquelle, die ein Strahlenbündel mit mindestens drei unterschiedlichen Wellenlängen liefert, und
   - mindestens einer Interferometer-Einheit, die das Strahlenbündel in ein Messstrahlenbündel und ein Referenzstrahlenbündel aufspaltet, wobei das Messstrahlenbündel in einem Messarm in Richtung eines entlang einer Messachse beweglichen Messreflektors propagiert und dort eine Rückreflexion erfährt und das Referenzstrahlenbündel in einem Referenzarm in Richtung eines stationären Referenzreflektors propagiert und dort eine Rückreflexion erfährt, wobei die vom Mess- und Referenzreflektor zurückreflektierten Mess- und Referenzstrahlenbündel sich interferierend in einem Interferenzstrahlenbündel überlagern, und
   - mindestens einer Detektions-Einheit, über die eine Aufspaltung des Interferenzstrahlenbündels dergestalt erfolgt, dass pro Wellenlänge jeweils mehrere phasenverschobene Teil-Interferenzsignale resultieren, und
   - mindestens einer Signalverarbeitungs-Einheit, die dazu ausgebildet und eingerichtet ist, aus den Teil-Interferenzsignalen unterschiedlicher Wellenlängen und einem zusätzlichen Grobpositionssignal eine absolute Positionsinformation bezüglich des Messreflektors zu bestimmen,

   **dadurch gekennzeichnet,**
   **dass** zur Erzeugung des Grobpositionssignals ($L_G$) eine der Mehrwellenlängen-Lichtquelle (11) unmittelbar nachgeordnete Modulations-Einheit (15) auf mindestens eine emittierte Wellenlänge ($\lambda_i$; i = 1, 2, 3) eine Phasenmodulation aufprägt, so dass ein phasenmoduliertes Strahlenbündel ($S_{PM}$; $S_{PM\_1}$, $S_{PM\_2}$, .. $S_{PM\_N}$) in Richtung der mindestens einen Interferometer-Einheit (30; 30.1, 30.2, ..30.N) propagiert und in mindestens einem Teil-Interferenzsignal ($S90_{\lambda iPM}$, $S210_{\lambda iPM}$, $S330_{\lambda iP}$; i = 1, 2, 3; $S90_{\lambda iPM\_j}$, $S210_{\lambda iPM\_j}$, $S330_{\lambda iPM\_j}$; i = 1, 2, 3; j = 1, 2 ... N) eine abstandsabhängige Modulation verursacht.

2. Vorrichtung nach Anspruch 1, **dadurch gekennzeichnet, dass** die Modulations-Einheit (15) einen elektrooptischen Modulator (12) sowie einen Sinusgenerator (13) umfasst, wobei der Sinusgenerator (13) den elektrooptischen Modulator (12) mit einer definierten Modulationsfrequenz ($f_{PM}$) und einer definierten Spannungsamplitude ($A_{PM}$) ansteuert.

3. Vorrichtung nach Anspruch 2, **dadurch gekennzeichnet, dass** die Modulationsfrequenz ($f_{PM}$) des Sinusgenerators (13) so gewählt ist, dass diese größer als auftretende mechanische und akustische Frequenzen ist.

4. Vorrichtung nach Anspruch 2, **dadurch gekennzeichnet, dass** die Modulationsfrequenz ($f_{PM}$) des Sinusgenerators (13) im Frequenzbereich [100 kHz... 10 MHz] gewählt ist.

5. Vorrichtung nach Anspruch 2, **dadurch gekennzeichnet, dass** der elektrooptische Modulator (12) als integrierter, fasergekoppelter Modulator ausgebildet ist.

6. Vorrichtung nach Anspruch 2, **dadurch gekennzeichnet, dass** in mindestens einem Teil-Interferenzsignal ($S90_{\lambda iPM}$, $S210_{\lambda iPM}$, $S330_{\lambda iP}$; i = 1, 2, 3; $S90_{\lambda iPM\_j}$, $S210_{\lambda iPM\_j}$, $S330_{\lambda iPM\_j}$; i = 1, 2, 3; j = 1, 2 ... N) eine abstandsabhängige Phasen- und Amplitudenmodulation resultiert.

7. Vorrichtung nach mindestens einem der vorhergehenden Ansprüche, **dadurch gekennzeichnet, dass** die Signalverarbeitungs-Einheit (50) dazu ausgebildet und eingerichtet ist, das Grobpositionssignal ($L_G$) zu erzeugen.

8. Vorrichtung nach Anspruch 7, **dadurch gekennzeichnet, dass** die Signalverarbeitungs-Einheit (50) dazu ausgebildet und eingerichtet ist,

- aus mindestens einem ausgewerteten Teil-Interferenzsignal ($S90_{\lambda iPM}$, $S210_{\lambda iPM}$, $S330_{\lambda iP}$; i = 1, 2, 3; $S90_{\lambda iPM\_j}$, $S210_{\lambda iPM\_j}$, $S330_{\lambda iPM\_j}$; i = 1, 2, 3; j = 1, 2 ... N) einen modulierten Phasenwert ($\Phi_{\lambda iPM}$; i = 1, 2, 3) zu bestimmen, und
- aus dem modulierten Phasenwert ($\Phi_{\lambda iPM}$; i = 1, 2, 3) eine Positionsphasenamplitude ($A_{\lambda i}$; i = 1..3) zu bestimmen, und
- mit Hilfe der Positionsphasenamplitude ($A_{\lambda i}$; i = 1..3) und der in das phasenmodulierte Strahlenbündel ($S_{PM}$) eingeprägten Lichtphasenamplitude ($A_{\lambda iPM}$; i = 1, 2, 3) das Grobpositionssignal ($L_G$) zu bestimmen.

9. Vorrichtung nach Anspruch 8, **dadurch gekennzeichnet, dass** das Grobpositionssignal ($L_G$) gemäß der Beziehung

$$L_G = \frac{c}{2\pi * f_{PM}} * \mathrm{asin}\left(\frac{A_{\lambda i}}{2A_{\lambda iPM}}\right)$$

bestimmt wird, mit

$L_G$ := Grobpositionssignal
c := Lichtgeschwindigkeit im Messmedium
$f_{PM}$ := Modulationsfrequenz
$A_{\lambda i}$; i = 1, 2, 3 := Positionsphasenamplitude
$A_{\lambda iPM}$; i = 1, 2, 3 := Lichtphasenamplitude

10. Vorrichtung nach Anspruch 8, **dadurch gekennzeichnet, dass** eine Lichtphasenamplituden-Ermittlungseinheit (80) dazu ausgebildet und eingerichtet ist, die dem phasenmodulierten Strahlenbündel ($S_{PM}$) eingeprägte Lichtphasenamplitude ($A_{\lambda iPM}$; i = 1, 2, 3) zu bestimmen.

11. Vorrichtung nach Anspruch 7 oder 8, **dadurch gekennzeichnet, dass** die Signalverarbeitungs-Einheit (50) desweiteren dazu ausgebildet und eingerichtet ist,

- aus den phasenverschobenen elektrischen Teil-Interferenzsignalen ($S90_{\lambda iPM}$, $S210_{\lambda iPM}$, $S330_{\lambda iP}$; i = 1, 2, 3; $S90_{\lambda iPM\_j}$, $S210_{\lambda iPM\_j}$, $S330_{\lambda iPM\_j}$; i = 1, 2, 3; j = 1, 2 ... N) pro Wellenlänge ($\lambda_1$, $\lambda_2$, $\lambda_3$) einen unmodulierten Phasenwert ($\Phi_{\lambda i1}$; i = 1, 2, 3) zu bestimmen, und
- aus den unmodulierten Phasenwerten ($\Phi_{\lambda i1}$; i = 1, 2, 3) mehrere Differenzphasen ($\Delta\Phi_{12}$, $\Delta\Phi_{23}$ und $\Delta\Phi$) zu bilden, die jeweils unterschiedlichen synthetischen Wellenlängen ($\Lambda_i$; i = 1, 2, 3) zugeordnet sind, und
- aus dem Grobpositionssignal ($L_G$) sowie den Differenzphasen ($\Delta\Phi_{12}$, $\Delta\Phi_{23}$ und $\Delta\Phi$) eine hochauflösende absolute Positionsinformation (L) bezüglich des Messreflektors (33) zu bestimmen.

12. Vorrichtung nach mindestens einem der vorhergehenden Ansprüche, **gekennzeichnet durch,**

- ein Aufspalt-Element (90), welches das phasenmodulierte Strahlenbündel ($S_{PM}$) in mehrere phasenmodulierte Teil-Strahlenbündel ($S_{PM\_R}$, $S_{PM\_j}$; j = 1, 2...N) aufteilt und,
- eine Mehrzahl von Interferometer-Einheiten (30.1, 30.2, ... 30.N), die jeweils unterschiedlichen Messachsen zugeordnet sind und denen jeweils ein phasenmoduliertes Teil-Strahlenbündel ($S_{PM\_j}$; j = 1, 2, .. N) zuführbar ist, wobei jeder Interferometer-Einheit (30.1, 30.2, ... 30.N) jeweils eine Detektionseinheit (40.1, 40.2, ... 40.N) und eine Signalverarbeitungs-Einheit (50.1, 50.2, ... 50.N) nachgeordnet ist, um für jede Messachse eine absolute Positionsinformation ($L_1$, $L_2$, ... $L_N$) bzgl. des jeweiligen Messreflektors zu bestimmen.

13. Vorrichtung nach Anspruch 10 und 12, **dadurch gekennzeichnet, dass** ein phasenmoduliertes Teil-Strahlenbündel ($S_{PM\_R}$) einer Lichtphasenamplituden-Ermittlungseinheit (80) zuführbar ist, die die daraus bestimmte Lichtphasenamplitude ($A_{\lambda iPM}$; i = 1, 2, 3) den Signalverarbeitungseinheiten (50.1, 50.2, ... 50.N) in den einzelnen Messachsen zur Weiterverarbeitung zuführt.

14. Vorrichtung nach mindestens einem der vorhergehenden Ansprüche, **dadurch gekennzeichnet, dass** die Interferometer-Einheit (30) eine Strahl-Aufspalteinheit (31), den entlang mindestens einer Messrichtung (x) beweglichen Messreflektor (33), den stationären Referenzreflektor (34) sowie eine Strahl-Vereinigungseinheit (31) umfasst, wobei über die Strahl-Aufspalteinheit (31) die Aufspaltung des phasenmodulierten Strahlenbündels ($S_{PM}$) in ein Mess- und ein Referenzstrahlenbündel ($M_M$, $M_R$) erfolgt und über die Strahl-Vereinigungseinheit (31) eine Überlagerung der vom Mess- und Referenzreflektor (33, 34) zurückreflektierten Mess- und Referenzstrahlenbündel ($M_M$, $M_R$) zum Interferenzstrahlenbündel ($IF_{PM}$) erfolgt.

## Claims

1. Apparatus for interferometric distance measurement, having

   - a multiple-wavelength light source, which provides a beam with at least three different wavelengths, and
   - at least one interferometer unit, which splits the beam into a measurement beam and a reference beam, wherein the measurement beam propagates in a measurement arm in the direction of a measurement reflector that is movable along a measurement axis and undergoes a back reflection there and the reference beam propagates in a reference arm in the direction of a stationary reference reflector and undergoes a back reflection there, wherein the measurement and reference beams that are back-reflected by the measurement and reference reflectors superpose in an interfering manner to form an interference beam, and
   - at least one detection unit, via which the interference beam is split in a manner such that in each case a plurality of phase-shifted partial interference signals result per wavelength, and
   - at least one signal processing unit, which is designed and configured to determine a piece of absolute position information with respect to the measurement reflector from the partial interference signals of different wavelengths and an additional rough position signal,

   **characterized in that**
   in order to generate the rough position signal ($L_G$), a modulation unit (15) arranged immediately downstream of the multiple-wavelength light source (11) impresses a phase modulation onto at least one emitted wavelength ($\lambda_i$; i = 1, 2, 3), such that a phase-modulated beam ($S_{PM}$; $S_{PM\_1}$, $S_{PM\_2}$, ... $S_{PM\_N}$) propagates in the direction of the at least one interferometer unit (30; 30.1, 30.2, ... 30.N) and causes a distance-dependent modulation in at least one partial interference signal ($S90_{\lambda iPM}$, $S210_{\lambda iPM}$, $S330_{\lambda iP}$; i = 1, 2, 3; $S90_{\lambda iPM\_j}$, $S210_{\lambda iPM\_j}$, $S330_{\lambda iPM\_j}$; i = 1, 2, 3; j = 1, 2, ... N).

2. Apparatus according to Claim 1, **characterized in that** the modulation unit (15) comprises an electrooptical modulator (12) and a sine-wave generator (13), wherein the sine-wave generator (13) actuates the electrooptical modulator (12) at a defined modulation frequency ($f_{PM}$) and a defined voltage amplitude ($A_{PM}$).

3. Apparatus according to Claim 2, **characterized in that** the modulation frequency ($f_{PM}$) of the sine-wave generator (13) is selected such that it is greater than mechanical and acoustic frequencies that arise.

4. Apparatus according to Claim 2, **characterized in that** the modulation frequency ($f_{PM}$) of the sine-wave generator (13) is selected in the frequency range [100 kHz ... 10 MHz].

5. Apparatus according to Claim 2, **characterized in that** the electrooptical modulator (12) is in the form of an integrated, fibre-coupled modulator.

6. Apparatus according to Claim 2, **characterized in that** a distance-dependent phase modulation and amplitude modulation results in at least one partial interference signal ($S90_{\lambda iPM}$, $S210_{\lambda iPM}$, $S330_{\lambda iP}$; i = 1, 2, 3; $S90_{\lambda iPM\_j}$,

$S210_{\lambda iPM\_j}$, $S330_{\lambda iMP\_j}$; i = 1, 2, 3; j = 1, 2, ... N) .

7. Apparatus according to at least one of the preceding claims, **characterized in that** the signal processing unit (50) is designed and configured to generate the rough position signal ($L_G$).

8. Apparatus according to Claim 7, **characterized in that** the signal processing unit (50) is designed and configured

  - to determine a modulated phase value ($\Phi_{\lambda iPM}$; i = 1, 2, 3) from at least one evaluated partial interference signal ($S90_{\lambda iPM}$, $S210_{\lambda iPM}$, $S330_{\lambda iP}$; i = 1, 2, 3; $S90_{\lambda iPM\_j}$, $S210_{\lambda iPM\_j}$, $S330_{\lambda iPM\_j}$; i = 1, 2, 3; j = 1, 2, ... N), and
  - to determine a position phase amplitude ($A_{\lambda i}$; i = 1 ... 3) from the modulated phase value ($\Phi_{\lambda iPM}$; i = 1, 2, 3), and
  - to determine the rough position signal ($L_G$) using the position phase amplitude ($A_{\lambda i}$; i = 1 ... 3) and the light phase amplitude ($A_{\lambda iPM}$; i = 1, 2, 3) impressed into the phase-modulated beam ($S_{PM}$).

9. Apparatus according to Claim 8, **characterized in that** the rough position signal ($L_G$) is determined according to the relationship

$$L_G = \frac{c}{2\pi * f_{PM}} * \text{asin} \left(\frac{A_{\lambda i}}{2A_{\lambda iPM}}\right)$$

where

$L_G$: = rough position signal
c: = light speed in the measurement medium
$f_{PM}$: = modulation frequency
$A_{\lambda i}$; i = 1, 2, 3: = position phase amplitude
$A_{\lambda iPM}$; i = 1, 2, 3: = light phase amplitude.

10. Apparatus according to Claim 8, **characterized in that** a light phase amplitude determination unit (80) is designed and configured to determine the light phase amplitude ($A_{\lambda iPM}$; i = 1, 2, 3) impressed on the phase-modulated beam ($S_{PM}$).

11. Apparatus according to Claim 7 or 8, **characterized in that** the signal processing unit (50) is furthermore designed and configured

  - to determine an unmodulated phase value ($\phi_{\lambda i1}$; i = 1, 2, 3) for each wavelength ($\lambda_1$, $\lambda_2$, $\lambda_3$) from the phase-shifted electrical partial interference signals ($S90_{\lambda iPM}$, $S210_{\lambda iPM}$, $S330_{\lambda iP}$; i = 1, 2, 3; $S90_{\lambda iPM\_j}$, $S210_{\lambda iPM\_j}$, $S330_{\lambda iPM\_j}$; i = 1, 2, 3; j = 1, 2, ... N), and
  - to form from the unmodulated phase values ($\phi_{\lambda i1}$; i = 1, 2, 3) a plurality of differential phases ($\Delta\phi_{12}$, $\Delta\Phi_{23}$ and $\Delta\phi$), which are each assigned to different synthetic wavelengths ($\lambda_i$; i = 1, 2, 3), and
  - to determine a piece of high-resolution absolute position information (L) with respect to the measurement reflector (33) from the rough position signal ($L_G$) and the differential phases ($\Delta\phi_{12}$, $\Delta\Phi_{23}$ and $\Delta\phi$).

12. Apparatus according to at least one of the preceding claims, **characterized by**

  - a splitting element (90), which splits the phase-modulated beam ($S_{PM}$) into a plurality of phase-modulated partial beams ($S_{PM\_R}$, $S_{PM\_j}$; j = 1, 2, ... N), and
  - a plurality of interferometer units (30.1, 30.2, ... 30.N), which are each assigned to different measurement axes and to each of which a phase-modulated partial beam ($S_{PM\_j}$; j = 1, 2, ... N) can be supplied, wherein each interferometer unit (30.1, 30.2, ... 30.N) has in each case a detection unit (40.1, 40.2, ... 40.N) and a signal processing unit (50.1, 50.2, ... 50.N) downstream thereof in order to determine an piece of absolute position information ($L_1$, $L_2$, ... $L_N$) with respect to the respective measurement reflector for each measurement axis.

13. Apparatus according to Claim 10 and 12, **characterized in that** a phase-modulated partial beam ($S_{PM\_R}$) can be supplied to a light phase amplitude determination unit (80) which supplies the light phase amplitude ($A_{\lambda iPM}$; i = 1, 2, 3) determined therefrom to the signal processing units (50.1, 50.2, ... 50.N) in the individual measurement axes for further processing.

**14.** Apparatus according to at least one of the preceding claims, **characterized in that** the interferometer unit (30) comprises a beam-splitting unit (31), the measurement reflector (33) that is movable along at least one measurement direction (x), the stationary reference reflector (34), and a beam-combining unit (31), wherein the splitting of the phase-modulated beam ($S_{PM}$) into a measurement and a reference beam ($M_M$, $M_R$) is effected by way of the beam-splitting unit (31), and a superposition of the measurement and reference beams ($M_M$, $M_R$), reflected back by the measurement and reference reflectors (33, 34), to form the interference beam ($IF_{RM}$) is effected by way of the beam-combining unit (31).

**Revendications**

**1.** Dispositif de mesure de distance interférométrique comprenant

- une source de lumière multi-longueurs d'onde qui délivre un faisceau de rayons d'au moins trois longueurs d'onde différentes, et
- au moins une unité interférométrique qui divise le faisceau en un faisceau de rayons de mesure et un faisceau de rayons de référence, le faisceau de rayons de mesure se propageant dans un bras de mesure en direction d'un réflecteur de mesure mobile le long d'un axe de mesure et subissant dans ledit réflecteur de mesure une rétro-réflexion et le faisceau de rayons de référence se propageant dans un bras de référence en direction d'un réflecteur de référence fixe et subissant dans ledit réflecteur de référence une rétro-réflexion, les faisceaux de rayons de mesure et de référence rétro-réfléchis par le réflecteur de mesure et le réflecteur de référence se superposant par interférence dans un faisceau de rayons d'interférence, et
- au moins une unité de détection, par le biais de laquelle la division du faisceau de rayons d'interférence est effectuée de manière à ce qu'il en résulte plusieurs signaux d'interférence partiels déphasés par longueur d'onde, et
- au moins une unité de traitement de signal qui est conçue et adaptée pour déterminer une information de position absolue par rapport au réflecteur de mesure à partir des signaux de référence partiels de différentes longueurs d'onde et d'un signal de position approximative supplémentaire,

**caractérisé en ce que**
pour générer le signal de position approximative ($L_G$), une unité de modulation (15), disposée immédiatement en aval de la source de lumière multi-longueurs d'onde (11), confère une modulation de phase à au moins une longueur d'onde émise ($\lambda_i$ ; i = 1, 2, 3), de sorte qu'un faisceau de rayons modulé en phase ($S_{PM}$ ; $S_{PM\_1}$, $S_{PM\_2}$,...$S_{PM\_N}$) se propage en direction de l'au moins une unité interférométrique (30 ; 30.1, 30.2,...30.N) et, dans au moins un signal d'interférence partiel ($S90_{\lambda iPM}$, $S210_{\lambda iPM}$, $S330_{\lambda iP}$ ; i= 1, 2, 3 ; $S90_{\lambda iPM\_j}$, $S210_{\lambda iPM\_j}$, $S330_{\lambda iPM\_j}$ ; i = 1, 2, 3 ; j = 1, 2...N), provoque une modulation dépendante de la distance.

**2.** Dispositif selon la revendication 1, **caractérisé en ce que** l'unité de modulation (15) comprend un modulateur électro-optique (12) et un générateur d'ondes sinusoïdales (13), le générateur d'ondes sinusoïdales (13) commandant le modulateur électro-optique (12) à une fréquence de modulation définie ($f_{PM}$) et une amplitude de tension définie ($A_{PM}$).

**3.** Dispositif selon la revendication 2, **caractérisé en ce que** la fréquence de modulation ($f_{PM}$) du générateur d'ondes sinusoïdales (13) est choisie de manière à être supérieure aux fréquences mécaniques et acoustiques présentes.

**4.** Dispositif selon la revendication 2, **caractérisé en ce que** la fréquence de modulation ($f_{PM}$) du générateur d'ondes sinusoïdales (13) est choisie dans la gamme de fréquences [100 kHz...10 MHz] .

**5.** Dispositif selon la revendication 2, **caractérisé en ce que** le modulateur électro-optique (12) est conçu comme un modulateur intégré couplé par fibre.

**6.** Dispositif selon la revendication 2, **caractérisé en ce que** dans au moins un signal d'interférence partiel ($S90_{\lambda iPM}$, $S210_{\lambda iPM}$, $S330_{\lambda iP}$ ; i = 1, 2, 3 ; $S90_{\lambda iPM\_j}$, $S210_{\lambda iPM\_j}$, $S330_{\lambda iPM\_j}$ ; i = 1, 2, 3 ; j = 1, 2...N) il en résulte une modulation de phase et d'amplitude dépendant de la distance.

**7.** Dispositif selon l'une au moins des revendications précédentes, **caractérisé en ce que** l'unité de traitement de signal (50) est conçue et adaptée pour générer le signal de position approximative ($L_G$).

**8.** Dispositif selon la revendication 7, **caractérisé en ce que** l'unité de traitement de signal (50) est conçue et adaptée pour

- déterminer une valeur de phase modulée ($\Phi_{\lambda_{iPM}}$ ; i = 1, 2, 3) à partir d'au moins un signal d'interférence partiel évalué ($S90_{\lambda_{iPM}}$, $S210_{\lambda_{iPM}}$, $S330_{\lambda_{iP}}$ ; i= 1, 2, 3 ; $S90_{\lambda_{iPM\_j}}$, $S210_{\lambda_{iPM\_j}}$, $S330_{\lambda_{iPM\_j}}$ ; i = 1, 2, 3 ; j = 1, 2...N), et
- déterminer une amplitude de phase de position ($A_{\lambda_i}$ ; i = 1...3) à partir de la valeur de phase modulée ($\Phi_{\lambda_{iPM}}$ ; i = 1, 2, 3), et
- déterminer le signal de position approximative ($L_G$) à l'aide de l'amplitude de phase de position ($A_{\lambda_i}$ ; i = 1...3) et l'amplitude de phase de lumière ($A_{\lambda_{iPM}}$ ; i = 1, 2, 3) conférée dans le faisceau modulé en phase ($S_{PM}$).

**9.** Dispositif selon la revendication 8, **caractérisé en ce que** le signal de position approximative ($L_G$) est déterminé suivant la relation

$$L_G = \frac{c}{2\pi * f_{PM}} * \mathrm{asin}\left(\frac{A_{\lambda i}}{2A_{\lambda iPM}}\right)$$

$L_G$ := signal de position approximative
$C$ := vitesse de la lumière dans le milieu de mesure
$f_{PM}$ := fréquence de modulation
$A_{\lambda_i}$ ; i = 1, 2, 3 := amplitude de phase de position
$A_{\lambda_{iPM}}$ ; i = 1, 2, 3 := amplitude de phase de lumière.

**10.** Dispositif selon la revendication 8, **caractérisé en ce qu'**une unité de détermination d'amplitude de phase de lumière (80) est conçue et adaptée pour déterminer l'amplitude de phase de lumière ($A_{\lambda_{iPM}}$ ; i = 1, 2, 3) communiquée au faisceau de rayons modulé en phase ($S_{PM}$).

**11.** Dispositif selon la revendication 7 ou 8, **caractérisé en ce que** l'unité de traitement de signal (50) est en outre conçue et adaptée pour

- déterminer une valeur de phase non modulée ($\Phi_{\lambda_{i1}}$ ; i = 1, 2, 3) à partir des signaux d'interférence partiels électriques déphasés ($S90_{\lambda_{iPM}}$, $S210_{\lambda_{iPM}}$, $S330_{\lambda_{iP}}$ ; i = 1, 2, 3 ; $S90_{\lambda_{iPM\_j}}$, $S210_{\lambda_{iPM\_j}}$, $S330_{\lambda_{iPM\_j}}$ ; i = 1, 2, 3 ; j = 1, 2...N) par longueur d'onde ($\lambda_1$, $\lambda_2$, $\lambda_3$), et
- former à partir des valeurs de phase non modulées ($\Phi_{\lambda_{i1}}$ ; i = 1, 2, 3) plusieurs phases différentielles ($\Delta\Phi_{12}$, $\Delta\Phi_{23}$ et $\Delta\Phi$) qui sont respectivement associées à des longueurs d'onde synthétiques différentes ($\Lambda_i$ ; i = 1, 2, 3) et
- déterminer une information de position absolue (L) à haute résolution par rapport au réflecteur de mesure (33) à partir du signal de position approximative ($L_G$) et des phases différentielles ($\Delta\Phi_{12}$, $\Delta\Phi_{23}$ et $\Delta\Phi$) .

**12.** Dispositif selon l'une au moins des revendications précédentes, **caractérisé par**

- un élément de division (90) qui divise le faisceau de rayons modulé en phase ($S_{PM}$) en plusieurs faisceaux de rayons partiels modulés en phase ($S_{PM\_R}$, $S_{PM\_j}$ ; j = 1, 2,...N) et,
- une pluralité d'unités interférométriques (30.1, 30.2,...30.N), qui sont chacune associées à des axes de mesure différents et à chacune desquelles un faisceau de rayons partiel modulé en phase ($S_{PM\_j}$ ; j = 1, 2,...N) peut être fourni, chaque unité interférométrique (30.1, 30.2, ... 30.N) étant suivie d'une unité de détection (40.1, 40.2,...40.N) et d'une unité de traitement de signal (50.1, 50.2,...50.N) afin de déterminer une information de position absolue ($L_1$, $L_2$,...$L_N$) par rapport au réflecteur de mesure respectif pour chaque axe de mesure.

**13.** Dispositif selon les revendications 10 et 12, **caractérisé en ce qu'**un faisceau de rayons partiel modulé en phase ($S_{PM\_R}$) peut être fourni à une unité de détermination d'amplitude de phase de lumière (80) qui fournit l'amplitude de phase de lumière ($A_{\lambda_{iPM}}$ ; i = 1, 2, 3) ainsi déterminée aux unités de traitement de signal (50.1, 50.2, ... 50.N) suivant les différents axes de mesure en vue d'un traitement ultérieur.

**14.** Dispositif selon l'une au moins des revendications précédentes, **caractérisé en ce que** l'unité interférométrique (30) comprend une unité de division de faisceau (31), le réflecteur de mesure (33) mobile suivant au moins une direction de mesure (x), le réflecteur de référence fixe (34) et une unité de combinaison de rayons (31), la division du faisceau de rayons modulé en phase ($S_{PM}$) en un faisceau de mesure et un faisceau de référence ($M_M$, $M_R$) étant effectuée par l'unité de division de faisceau (31), et une superposition du faisceau de rayons de mesure et du faisceau de référence ($M_M$, $M_R$), rétro-réfléchis par le réflecteur de mesure et le réflecteur de référence (33, 34), étant effectuée par l'unité de combinaison de faisceau (31) pour obtenir le faisceau de rayons d'interférence ($IF_{PM}$).

# FIG. 1

EP 4 050 301 B1

# FIG. 2

FIG. 3

FIG. 4

FIG. 5

# FIG. 6

FIG. 7

# FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017213258 A1

- WO 2018171970 A1

**In der Beschreibung aufgeführte Nicht-Patentliteratur**

- **K. FALAGGIS ; C.E. TOWERS.** Absolute metrology by phase and frequency modulation for multiwavelength interferometry. *Optics Letters,* 01. August 2011, vol. 36, 2928-2930